(19) Europäisches Patentamt
European Patent Office
Office européen des brevets

(11) Publication number: **0 174 875**
**B1**

(12) # EUROPEAN PATENT SPECIFICATION

(45) Date of publication of patent specification: **06.06.90**

(21) Application number: **85306567.0**

(22) Date of filing: **16.09.85**

(51) Int. Cl.[5]: **C 09 K 11/61**, C 09 K 11/62, C 09 K 11/64, C 09 K 11/65, C 09 K 11/85, C 09 K 11/86

(54) **Method for converting radiographic image and radiation energy storage panel having stimulable phosphor-containing layer.**

(30) Priority: **14.09.84 JP 195146/84**
**14.09.84 JP 195147/84**
**14.09.84 JP 195148/84**
**14.09.84 JP 195149/84**
**18.09.84 JP 196366/84**
**18.09.84 JP 196367/84**

(43) Date of publication of application:
**19.03.86 Bulletin 86/12**

(45) Publication of the grant of the patent:
**06.06.90 Bulletin 90/23**

(84) Designated Contracting States:
**DE NL**

(56) References cited:
**EP-A-0 021 342**
**EP-A-0 029 963**
**EP-A-0 083 085**
**EP-A-0 095 741**
**EP-A-0 104 652**
**FR-A-2 301 088**
**FR-A-2 358 745**
**NL-A-8 302 533**

(73) Proprietor: **KONISHIROKU PHOTO INDUSTRY CO. LTD.**
**No. 26-2, Nishishinjuku 1-chome Shinjuku-ku**
**Tokyo 160 (JP)**

(72) Inventor: **Shimada, Fumio c/o Konishiroku Photo**
**Industry Co. Ltd. 1 Sakuramachi**
**Hino-shi Tokyo (JP)**
Inventor: **Kano, Akiko c/o Konishiroku Photo**
**Industry Co. Ltd. 1 Sakuramachi**
**Hino-shi Tokyo (JP)**
Inventor: **Amitani, Koji c/o Konishiroku Photo**
**Industry Co. Ltd. 1 Sakuramachi**
**Hino-shi Tokyo (JP)**
Inventor: **Tsuchino, Hisanori c/o Konishiroku Photo**
**Industry Co. Ltd. 1 Sakuramachi**
**Hino-shi Tokyo (JP)**

(74) Representative: **Ellis-Jones, Patrick George Armine et al**
**J.A. KEMP & CO. 14 South Square Gray's Inn**
**London WC1R 5EU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 174 875 B1

## Description

This invention relates to a method for converting a radiographic image and a radiation energy storage panel having a stimulable phosphor-containing layer; more particularly, it is concerned with a method for converting a radiographic image utilizing a stimulable phosphor and a radiation energy storage panel utilizing an alkali halide phosphor activated with thallium and the like.

Hitherto, there has been employed the so-called radiography using a silver salt for a radiation image, but there is now a need for a method of making a radiation image without using any silver salt.

Instead of the aforesaid radiography, there has been proposed a method wherein radiation transmitted through the subject is absorbed in a phosphor, the phosphor is excited with center energy to emit radiation energy having accumulated in said phosphor as fluorescence and the fluorescence is detected to form an image. Specifically, there has been proposed a method wherein a thermostimulable phosphor is used as a phosphor and a radiation image is converted by using thermal energy as an exciting energy [see British Patent No. 1,462,769 and Japanese Provisional Patent Publication No. 29889/1976]. This conversion method employs a panel having a thermostimulable phosphor layer formed over a support; radiation transmitted through the subject is absorbed into the thermostimulable phosphor layer of said panel so as to accumulate radiation energy of different levels of radiation, the thermostimulable phosphor layer is heated to take out the accumulated radiation energy as a photosignal and then a corresponding image is formed. However, this method requires heating for converting radiation energy to a photosignal and thus it is absolutely essential that the panel has a heat resistance without any modification or deformation on heating. Thus, there is a great restriction in thermostimulable phosphor layers forming the panel, raw materials for a support and the like. There is thus a considerable difficulty in practical application with regard to this method for converting radiographic image using a thermostimulable phosphor as a phosphor and a thermal energy as an exciting energy. On the other hand, there is also known another method for converting radiographic image wherein one uses a panel having a stimulable phosphor-containing layer placed over a support and as an exciting energy either or both of visible light and infrared light (see U.S. Patent No. 3,859,527). This latter method may be said to be a more preferable method for converting radiographic image, since no heating is required for converting the accumulated radiation energy to a photosignal as is the case in the former method and no need for heat resistance of the panel.

Among the phosphors employed in the aforesaid method for converting radiographic image, there have been proposed phosphors such as LiF:Mg, $BaSO_4$:Mn, $CaF_2$:Dy and the like. Moreover, there have been proposed phosphors such as KCl:Tl or BaFX:$Eu^{2+}$ type (X: Cl, Br, I) phosphor as disclosed in Japanese Provisional Patent Publication No. 75200/1984 as a stimulable phosphor using as an exciting energy visible light or an infrared light.

Now, where the said method for converting radiographic image is to be applied to X-ray image conversion for medical diagnosis, it is desirably of a high a sensitivity as possible in order to reduce the exposed dose for patients, so that it is desired that the stimulable phosphor used for the method shows as high an emission luminance by simulation as possible.

In the above-mentioned method, the reading speed for the radiation image should be increased for enhanced operation efficiency and, therefore, the stimulable phosphor should desirably have a rapid response speed of stimulable emission to the exciting light.

In the above-mentioned method, a radiation energy storage panel is repeatedly used after elimination of the residual image formed by previous use; however, it is desirable that the elimination time for the residual image should be short in said radiation energy storage panel and also that the stimulable phosphor used in the method should have a rapid elimination time for residual image.

However, the above stimulable phosphors are not completely satisfactory in all respects, e.g. stimulable emission luminance, response speed to stimulable emission and elimination speed for residual image and there has been a desire to improve them.

Additionally, the reading apparatus for the radiation image in the above methods should be desirably miniaturized, of low cost and simple and, thus, it is essential to use as an exciting light source a semi-conductor laser rather than a gas laser, e.g., an $Ar^+$ laser, an He-Ne laser and the like. Accordingly, it is desirable that the stimulable phosphor employed in this method should have a stimulable exciting spectrum adaptable to an oscillating wave length (not less than 750 nm) of a semi-conductor laser.

However, the above stimulable phosphor hardly exerts a stimulable emission to an oscillating wave length of a semi-conductor laser and thus there has been a desire for a longer wave length stimulable exciting spectrum.

As the alkali halide phosphor, there have been also known CsI:Na, CsI:Tl, CsBr:Tl, RbBr:Eu, RbCl:Eu, KCl:Tl, LiF:Mg and the like. Among them, CsI:Na or CsI:Tl has been applied to I.I. tube for X-ray, while CsBr:Tl has been tried for a similar application. Also, it is known that RbBr:Eu, RbCl:Eu or LiF:Mg are thermostimulable phosphors and that KCl:Tl may show a stimulable phenomenon.

It can be seen that a stimulable phosphor may be utilized as an accumulated radiation energy storage panel by absorbing radiation transmitted through the subject, emitting as fluorescence the radiation energy accumulated in the phosphor by irradiation with either or both of visible light with a longer wave length and infrared light and detecting said fluorescence to form a radiation image of the subject. But, the subjects are frequently human beings; therefore, there is a need for a low exposed dose to the subject and

there is a desire for a phosphor having a higher stimulable emission efficiency. Further, a scanning time per image element is practically about 10 μsec (from the relationship between a reading time and resolving power and a readable area in a radiation energy storage panel) and there is also a desire for a phosphor having a shorter shelf life of stimulable emission. Further, the afterglow from a stimulable emission on reading, if any, may cause deterioration of the SN ratio and there is a desire for a phosphor showing no such an afterglow phenomenon.

It is an object of the present invention to provide a method for converting radiographic image comprising absorbing a radiation transmitted through the subject in a stimulable phosphor, exciting the stimulable phosphor with an electromagnetic wave in the region of visible light and/or infrared light or ray to emit the accumulated radiation energy in the stimulable phosphor and detecting such a fluorescence, wherein there is employed a stimulable phosphor with emission having high luminance with a high sensitivity as well as a rapid response speed of stimulable emission to an exciting light so that reading is possible at a high speed and a rapid elimination speed for residual image upon repeated use. The stimulable phosphor should have a broadened stimulable excited spectrum up to the near infrared region so that a semi-conductor laser may be employable as an exciting light.

We have made various studies on a stimulable phosphor which may exert a stimulable emission with a higher luminance for meeting the aforesaid objects and which also presents no problems on reduced emission luminance by stimulation with time, and, as a result, it has been found that this can be accomplished, according to the present invention, by a method of converting a radiographic image wherein it comprises the steps of:

(a) storing radiation energy-corresponding to a radiographic image in a stimulable phosphor of a panel comprising a stimulable phosphor-containing layer,

(b) scanning said layer with a stimulating ray to release said stored energy as a fluorescence, and

(c) detecting said fluorescence to form an image, wherein said stimulable phosphor is represented by the following formula [I]:

$$(M_{1-x} \cdot M^{I}_{x})X \cdot aM^{II}X'_2 \cdot bM^{III}X''_3 \cdot cA{:}dB \qquad [I]$$

wherein M represents either Cs or Rb; $M^I$ represents at least one alkaline metal selected from the group consisting of Li, Na, K, Rb and Cs; $M^{II}$ represents at least one divalent metal selected from the group consisting of Be, Mg, Ca, Sr, Ba, Zn, Cd, Cu and Ni; $M^{III}$ represents at least one metal selected from the group consisting of Sc, Y, La, Ce, Pr, Nd, Pm, Sm, Eu, Gd, Tb, Dy, Ho, Er, Tm, Yb, Lu, Al, Ga and In; A represents at least one metal oxide selected from the group consisting of BeO, MgO, CaO, SrO, BaO, ZnO, $Al_2O_3$, $Y_2O_3$, $La_2O_3$, $In_2O_3$, $SiO_2$, $TiO_2$, $ZnO_2$, $GeO_2$, $SnO_2$, $Nb_2O_5$, $Ta_2O_5$ and $ThO_2$; B represents at least one metal selected from the group consisting of Eu, Tb, Ce, Tm, Dy, Pr, Ho, Nd, Yb, Er, Gd, Lu, Sm, Y, Tl, Na, Ag, Cu, Mg, Pb, Bi, Mn and In; X, X' and X'' each may be the same or different and represent a halogen atom selected from F, Cl, Br and I; x, a, b, c and d are numerals in the range of $0 \leqq x \leqq 1$, $0 \leqq a \leqq 1$, $0 \leqq b \leqq 0.5$, $0 \leqq c \leqq 0.5$ and $0 < d \leqq 0.2$, respectively.

Brief description of the drawings

Fig. 1 shows the response characteristics of a stimulable phosphor;

Fig. 2 shows the residual image elimination characteristics of a stimulable phosphor;

Fig. 3 is a flow sheet illustrating an embodiment of the present method;

Fig. 4 shows a stimulable emission spectrum of a stimulable phosphor used in the present invention;

Fig. 5 shows an excited spectrum of the above phosphor sample;

Figs. 6 and 7 show stimulable emission spectra of a phosphor sample used in this invention;

Figs. 8 and 9 show stimulable excited spectra of the above phosphor sample; and

Fig. 10 shows the results from a forced humidity test.

The alkali halide stimulable phosphor having the composition according to this invention, when excited with an electromagnetic wave in the region of from visible to up to infrared, can exert a higher luminance of stimulable emission than the prior alkali halide type stimulable phosphor does and, moreover, there can be provided a method for converting the radiographic image without problems of lowered stimulable emission luminance with lapse of time.

The method for converting radiographic image of this invention may be practiced using a radiation energy storage panel containing a stimulable phosphor having the above formula [I]; this panel forms another aspect of the present invention.

A radiation energy storage panel comprises basically a support or a base and at least one stimulable phosphor-containing layer provided over either side or both sides thereof. Generally, there is provided over the surface of the opposite side of the support to said stimulable phosphor-containing layer a protective layer for chemically or physically protecting said stimulable phosphor-containing layer. More specifically, the method for converting radiographic image according to this invention may use a radiation energy storage panel comprising a support and at least one stimulable phosphor-containing layer placed over the said support, characterized in that at least one layer of said stimulable phosphor layers contains a stimulable phosphor represented by the above formula [I].

The stimulable phosphor of the above formula [I], after absorbing radiation such as X-rays, may exhibit

a stimulable emission when irradiated with light in the visible or infrared region, preferably light in the wave length region of 500—900 nm (namely, an exciting light). Accordingly, radiation transmitted through the subject or emitted from the subject may be absorbed by the stimulable phosphor contained in the stimulable phosphor-containing layer of a radiation energy storage panel, proportionally to the radiation amount or dose, and the radiation image thereof may be formed on said radiation energy storage panel as a latent image having accumulated therein radiation energy. This latent image may show a stimulable emission proportional to the accumulated radiation energy by excitation with an exciting light having a wave length region of not less than 500 nm and then the latent image having accumulated therein radiation energy may be converted to a visible image by a photoelectric reading of said stimulable emission.

This invention will be more fully illustrated below by referring to the accompanied drawings.

Fig. 1 shows the response characteristics of exciting light by a stimulable phosphor represented by the above formula [I] which may be applied to the present method for converting radiographic image, as compared with the stimulable phosphor of the prior art method.

In Fig. 1, (a) indicates the response characteristics to exciting light by a stimulable phosphor employable in the present method for converting radiographic image, while (b) and (c) show, respectively, response characteristics of the prior art stimulable phosphor, BaFBr:Eu and BaFCl:Eu, the dotted line showing the state of an exciting light having rectangularly variable strength.

As apparent from Fig. 1, a stimulable phosphor, which may be employed in the present invention, has remarkably superior response characteristics to exciting light, which may lead to a higher reading speed for radiation image, as compared with the prior art method.

Fig. 2 shows residual image elimination characteristics by a stimulable phosphor represented by the above formula [I] which may be employed in the present invention, as compared with the stimulable phosphor in the prior art method.

In Fig. 2, (d) shows the decay characteristics of accumulated energy as seen when a certain amount of radiation is irradiated to a stimulable phosphor employable in the method for converting radiographic image of the present invention and then the accumulated energy is eliminated using a tungsten lamp light, and (e) and (f) show, respectively, decay characteristics of accumulated energy when stimulable phosphors, BaFBr:Eu and BaFCl:Eu, employable for the prior art method are measured in the same manner as above.

As apparent from Fig. 2, the stimulable phosphor employable for the method for converting radiographic image of the present invention can exhibit a high decay speed of accumulated energy, which may lead to a reduced time for eliminating residual image in comparison with the prior art method.

Fig. 3 shows, in outline, an embodiment wherein a stimulable phosphor represented by the above formula [I] is employed in a radiation energy storage panel of the present invention.

In Fig. 3, 11 is a radiation generating apparatus, 12 is the subject, 13 is a radiation energy storage panel which contains a visible or infrared light stimulable phosphor-containing layer having a stimulable phosphor of the above formula [I], 14 is an exciting light source emitting as fluorescence a radiation latent image of the radiation energy storage panel 13, 15 is a photoelectric conversion apparatus for detecting the fluorescence emitted from the radiation energy storage panel 13, 16 is a regenerating apparatus for the photoelectric signal detected with the photoelectric conversion apparatus 15 as image, 17 is an apparatus for representing the regenerated image and 18 is a filter for cutting out reflective light from light source 14 and transmitting only the light emitted from the radiation energy storage panel 13. Though Fig. 3 shows the case where a radiation transmission image of the subject is to be formed, there is no particular need for the said radiation generating apparatus 11 if the subject 12 itself would emit radiation. Also, the apparatus after the photoelectric conversion apparatus 15 may be any one where a photosignal from the panel 13 could be regenerated as an image in any form or shape. As illustrated in Fig. 3, when the subject 12 is positioned between the radiation generating apparatus 11 and the radiation energy storage panel 13 and irradiated with radiation, radiation may transmit according to changes in radiation transmittance of each part in the subject 12 and the transmitted image enters the radiation energy storage panel 13. This incident transmitted image is absorbed by a stimulable phosphor-containing layer of the radiation energy storage panel 13, whereby the number of electrons and/or positive holes could be generated proportionally to the radiation dose absorbed by the stimulable phosphor-containing layer and accumulated in the trap level of the stimulable phosphor. Thus, there is formed a latent image having accumulated therein energy from the radiation transmission image. Subsequently, the latent image is actualized by excitation with photo-energy. Thus, the stimulable phosphor-containing layer is irradiated with a light source 14 emitting light in the visible or infrared region to drive out the electrons and/or positive holes accumulated in the trap level and emit accumulated energy as fluorescence. Variations in the emitted fluorescence are proportional to the number of accumulated electron and/or positive holes, i.e., strength and weakness of the radiation energy absorbed by the stimulable phosphor-containing layer of the radiation energy storage panel 13; the photosignal is converted to an electric signal by means of a photoelectric conversion apparatus 15, e.g., a photomultiplier and regenerated as image by means of an image processing apparatus 16 and then the image is represented by means of an image representing apparatus 17. The image processing apparatus 16 need not only regenerate an electric signal simply as an image signal but, more effectively, one can use apparatus capable of accomplishing the so-called image processing, image operation, image memory or image storage.

Also, in the present method, there is a need to separate the reflective light from exciting light from the fluorescence emitted from the stimulable phosphor-containing layer; the photoelectric conversion apparatus receiving fluorescence emitted from the stimulable phosphor-containing layer should generally be highly sensitive to photo-energy of a short wave length light (not more than 600 nm), so that fluorescence emitted from the stimulable phosphor-containing layer may desirably have a spectral distribution within a short wave length region as possible. The light emitted from the stimulable phosphor employable for the present method suitably has a wave length of 300—500 nm, while the exciting light suitably has a wave length of 500—900 nm; thus, the above-mentioned conditions may be simultaneously satisfied. More specifically, said stimulable phosphor employable in this invention generally shows an emission having a main peak of not more than 500 nm, which can be easily separated from the exciting light and coincide well with the spectral sensitivity of the receiving apparatus to achieve an effective body of light, which can lead to an enhanced sensitivity of the image receiving system.

As the stimulable exciting light source 14 which may be employed for the present method, there may be used a light source involving a stimulable exciting wave length of the stimulable phosphor used for the radiation energy storage panel 13. Particularly, use of laser light may simplify the optical system and, in addition, the stimulable emission efficiency can be enhanced, because of a possible increase in strength of the exciting light, to give more satisfactory results. As the laser, there may be mentioned an He-Ne laser, an He-Cd laser, an Ar ion laser, a Kr ion laser, an $N_2$ laser, a YAG laser or a second harmonic wave thereof, a ruby laser, a semi-conductor laser, various pigment lasers and a metal vapour laser such as a copper vapour laser, for example. Usually, there are preferably employed continuous wave lasers such as an He-Ne laser or an Ar ion laser, but there may be also used a pulse-oscillating laser if the scanning time in one image element of the panel is synchronized with the pulse. Further, where the method of separation utilizing emission delay as disclosed in Japanese Provisional Patent Publication No. 22046/1984 without using the filter 18, is used it is preferable to utilize a pulse-oscillating laser rather than modulation using a continuously oscillating laser.

Among the above-mentioned various laser light sources, a semi-conductor laser is particularly preferable, because it is small-sized and inexpensive and further there is no need to use a modulator.

The filter 18 serves to transmit the stimulable emission emitted from the radiation energy storage panel 13 and cut out exciting light; therefore, it is chosen from a combination of the wave length of the stimulable emission from the stimulable phosphor contained in the radiation energy storage panel 13 with the wave length of the exciting light 14. For instance, in the case of a stimulable exciting wave length 500—900 nm, with a stimulable emission wave length 300—500 nm, there may be used as a filter, for instance, various purple to blue colored glass filters, e.g., C-39, C-40, V-40, V-42 and V-44 (available from Kabushiki Kaisha Toshiba), 7-54 and 7-59 (available from Corning Co., Ltd.), BG-1, BG-3, BG-25, BG-37 and BG-38 (available from Spectrofilm Co., Ltd.), for example. An interference filter may also be used.

As the photoelectric conversion apparatus 15, there may be employed any of those capable of converting a change in amounts of light to a change in amounts of electric signal, for example, a photoelectric tube, a photomultiplier, a photodiode, a phototransistor, a solar cell or a photoconductive element.

Next, the radiation energy storage panel of the present invention will be illustrated.

The radiation energy storage panel, as explained above, is composed of a support or base and at least one layer of stimulable phosphor-containing layers containing a stimulable phosphor represented by the above general formula [I], said layer being placed over said support.

Among the stimulable phosphor [I], there are preferably mentioned, with regard to stimulable emission luminance, the phosphor of the general formula [I] wherein $M^I$ is at least one alkali metal selected from Li, Na, K, Rb and Cs, more preferably, Rb, Cs, Na containing Rb and/or Cs and K containing Rb and/or Cs, particularly preferably at least one of Rb and Cs. $M^{II}$ is preferably at least one alkaline earth metal selected from Be, Mg, Ca, Sr, and Ba. $M^{III}$ is preferably at least one trivalent metal selected from Y, La, Lu, Sm, Al, Ga, Gd and In. X, X′ and X″ are preferably at least one halogen selected from F, Cl and Br. The value of a, representing the content of $M^{II}X'_2$ and of b, representing the content of $M^{III}X''_3$ are preferably selected from the range of $0 \leqq a < 0.4$ and $0 \leqq b \leqq 10^{-2}$, respectively, a>0.5 is not preferable, in particular, owing to a rapid decrease in stimulable emission luminance.

In the above general formula [I], the metal oxide A is preferably at least one of MgO, $Al_2O_3$, $SiO_2$ and $TiO_2$. The value c, representing the content of A is preferably in the range of $0 \leqq c \leqq 0.2$.

The activator B is preferably at least one metal selected from Eu, Tb, Ce, Tm, Dy, Ho, Gd, Lu, Sm, Y, Tl and Na, preferably at least one metal selected from Eu, Ce, Sm, Tl and Na; more preferably, B comprises at least Tl. The value d for an amount of the activator is preferably selected from the range of $10^{-6} \leqq d \leqq 0.1$ for stimulable emission luminance.

There are preferably employed the alkali halide phosphor represented by the above formula [I′].

The alkali halide phosphor having the above composition is irradiated with radiation such as X-rays, ultra-violet rays, or an electron beam, for example and then stimulated and excited by irradiation with either or both of visible and infrared lights, whereby a stimulated excitation can occur, which is clearly stronger than that obtained from an alkali halide phosphor already known.

When the present alkali halide phosphor having the above composition is irradiated with radiation such as X-ray, ultra-violet ray or an electron beam and then stimulated and excited by irradiation with

either or both of visible and infrared light at a rectangularly variable strength, a better response to stimulable excitation can be realized with less afterglow of stimulation, as compared with the alkali halide phosphor already known and used in the same manner as above.

The present stimulable phosphor

$$(M_{1-x} \cdot M'_x)X \cdot aM^{II}X'_2 \cdot bM^{III}X''_3 \cdot cA{:}dB$$

can be prepared, e.g., according to the process described below.

As a raw material for the stimulable phosphor, there may be employed:

I) One or more of LiF, LiCl, LiBr, LiI, NaF, NaCl, NaBr, NaI, KF, KCl, KBr, KI, RbF, RbCl, RbBr, RbI, CsF, CsCl, CsBr and CsI;

II) One or more of $BeF_2$, $BeCl_2$, $BeBr_2$, $BeI_2$, $MgF_2$, $MgCl_2$, $MgBr_2$, $MgI_2$, $CaF_2$, $CaCl_2$, $CaBr_2$, $CaI_2$, $SrF_2$, $SrCl_2$, $SrBr_2$, $SrI_2$, $BaF_2$, $BaCl_2$, $BaBr_2$, $BaBr_2 \cdot 2H_2O$, $BaI_2$, $ZnF_2$, $ZnCl_2$, $ZnBr_2$, $ZnI_2$, $CdF_2$, $CdCl_2$, $CdBr_2$, $CdI_2$, $CuF_2$, $CuCl_2$, $CuBr_2$, CuI, $NiF_2$, $NiCl_2$, $NiBr_2$ and $NiI_2$;

III) One or more of $ScF_3$, $ScCl_3$, $ScBr_3$, $ScI_3$, $YF_3$, $YCl_3$, $YBr_3$, $YI_3$, $LaF_3$, $LaCl_3$, $LaBr_3$, $LaI_3$, $CeF_3$, $CeCl_3$, $CeBr_3$, $CeI_3$, $PrF_3$, $PrCl_3$, $PrBr_3$, $PrI_3$, $NdF_3$, $NdCl_3$, $NdBr_3$, $NdI_3$, $PmF_3$, $PmCl_3$, $PmBr_3$, $PmI_3$, $SmF_3$, $SmCl_3$, $SmBr_3$, $SmI_3$, $EuF_3$, $EuCl_3$, $EuBr_3$, $EuI_3$, $GdF_3$, $GdCl_3$, $GdBr_3$, $GdI_3$, $TbF_3$, $TbCl_3$, $TbBr_3$, $TbI_3$, $DyF_3$, $DyCl_3$, $DyBr_3$, $DyI_3$, $HoF_3$, $HoCl_3$, $HoBr_3$, $HoI_3$, $ErF_3$, $ErCl_3$, $ErBr_3$, $ErI_3$, $TmF_3$, $TmCl_3$, $TmBr_3$, $TmI_3$, $YbF_3$, $YbCl_3$, $YbBr_3$, $YbI_3$, $LuF_3$, $LuCl_3$, $LuBr_3$, $LuI_3$, $AlF_3$, $AlCl_3$, $AlBr_3$, $AlI_3$, $GaF_3$, $GaCl_3$, $GaBr_3$, $GaI_3$, $InF_3$, $InCl_3$, $InBr_3$, $InI_3$;

IV) An activator material of one or more of the Eu compound group, Tb compound group, Ce compound group, Tm compound group, Dy compound group, Pr compound group, Ho compound group, Nd compound group, Yb compound group, Er compound group, Gd compound group, Lu compound group, Sm compound group, Y compound group, Tl compound group, Na compound group, Ag compound group, Cu compound group and Mg compound group; and

V) one or more of BeO, MgO, CaO, SrO, BaO, ZnO, $Al_2O_3$, $Y_2O_3$, $La_2O_3$, $In_2O_3$, $SiO_2$, $TiO_2$, $ZrO_2$, $GeO_2$, $SnO_2$, $Nb_2O_5$, $Ta_2O_5$ and $ThO_2$.

In the case of the phosphor having the formula [I'], there may be employed, as the above-mentioned Tl compound,

VI) One or more thallium compounds such as TlF, TlCl, TlBr, TlI, $Tl_2O$ and $Tl_2O_3$.

Raw materials of the above-mentioned stimulable phosphor I)—V) are weighed so as to form a mixture composition of the formula [I]:

$$(M_{1-x} \cdot M'_x)X \cdot aM^{II}X'_2 \cdot bM^{III}X''_3 \cdot cA{:}dB$$

wherein stoichiometrically

| | |
|---|---|
| $0 \leqq a \leqq 1$, | preferably $0 \leqq a \leqq 0.4$, |
| $0 \leqq b \leqq 0.5$, | preferably $0 \leqq b \leqq 10^{-2}$, |
| $0 \leqq c \leqq 0.5$, | preferably $0 \leqq c \leqq 0.2$, and |
| $0 < d \leqq 0.2$, | preferably $10^{-6} \leqq d \leqq 0.1$, |

and then mixed well by means of a mortar, a ball mill or mixer mill for example.

Then, the resulting stimulable phosphor raw material mixture is charged into a heat-resistant vessel such as a quartz crucible or an alumina crucible and baked in an electric furnace. The baking temperature is suitably 500 to 1000°C. The baking period of time may be varied depending upon the amount of raw mixture charged and the baking temperature applied, for example, but 0.5—6 hours is generally suitable. As a baking atmopshere, there may suitably be applied a weakly oxidative atmosphere such as a nitrogen gas atmosphere containing a small volume of oxygen gas, or a neutral atmosphere such as a nitrogen gas atmosphere or an argon gas atmosphere. Moreover, radiation luminance of the phosphor may be enhanced by taking out the baked product from the electric furnace after being baked under the above-mentioned baking conditions, finely grinding it, charging the baked powder again into a heat resistant vessel, placing it is an electric furnace and then annealing under the same baking conditions as above. When the baked product is cooled from the baking temperature to room temperature, the desired stimulable phosphor may be obtained by taking out the baked product from the electric furnace and allowing it to be cooled in air; however, the radiation luminance of the stimulable phosphor may be further enhanced by cooling the said phosphor under the same weakly oxidative atmosphere or neutral atmosphere as applied in baking. Further, the radiation luminance of the resulting product may be enhanced even further by moving the baked product from a heating portion to a cooling portion in an electric furnace to quench the phosphor in a weakly oxidative atmosphere or a neutral atmosphere. Moreover, it is preferable to obtain said stimulable phosphor raw material as a uniform mixture to prepare said material as an aqueous dispersion; in this instance, the dispersion is dried and then subjected to the above-mentioned baking.

After baking, the resultant stimulable phosphor is finely ground and subsequently worked according to various procedures commonly adopted for preparing a phosphor such as washing, drying and screening to afford the stimulable phosphor of this invention.

The average particle diameter of the stimulable phosphor, which may be employed for the radiation energy storage panel 13, may be optionally selected in the range of an average particle diameter of 0.1—100 μm, taking into consideration the sensitivity and graininess of the radiation energy storage panel 13. More preferably, phosphor with an average particle size of 1—30 μm may be used.

In the radiation energy storage panel 13, the present stimulable phosphor may be generally dispersed in a suitable binder and coated over a support. As the binder, there may be usually applied those binders employed for laminating such as a protein, e.g., gelatin; a polysaccharide, e.g., dextran or gum arabic; a polyvinyl butyral; a polyvinyl acetate, a cellulose nitrate, an ethyl cellulose, a vinylidene chloride-vinyl chloride copolymer, a poly(methyl methacrylate), a vinyl chloride-vinyl acetate copolymer, a polyurethane, a cellulose acetate butyrate or a polyvinyl alcohol.

Generally, a binder may be employed in the range of 0.01—1 part by weight per 1 part by weight of the stimulable phosphor. However, less binder is preferable for sensitivity and sharpness of the resulting radiation energy storage panel 13 and a range of 0.03—0.2 part by weight is more preferable for the point of view of easiness in coating.

Moreover, there may be generally placed in the present radiation energy storage panel 13 a protective layer physically or chemically protecting the stimulable phosphor-containing layer over an externally exposed surface of the stimulable phosphor-containing layer (i.e., an uncovered surface at the bottom of the phosphor layer base plate). The protective layer may be formed by direct coating of a coating liquid for the protective layer over the stimulable phosphor-containing layer or by adhesion of the protective layer previously and separately prepared over the stimulable phosphor-containing layer.

As material for the protective layer, there may be employed those materials commonly used for the protective layer such as a cellulose nitrate, an ethyl cellulose, a cellulose acetate, a polyester or a polyethylene terephthalate.

Further, if the protective layer is to transmit a stimulable emission light irradiation may be done from the protective layer side; there may be selected any of those capable of transmitting an excited light, with a preferable film thickness of approximately 2—40 μm.

One embodiment of the preparation of the radiation energy storage panel 13 will be illustrated hereinbelow.

First, a finely ground stimulable phosphor, a binder and a solvent are admixed, kneaded well to prepare a coating liquid having uniformly dispersed therein the stimulable phosphor.

As the above-mentioned solvent, there may be mentioned, for instance, a lower alcohol such as methanol, ethanol, n-propanol or n-butanol; a chlorine-containing hydrocarbon such as methylene chloride or ethylene chloride; a ketone such as acetone, methyl ethyl ketone or methyl isobutyl ketone; a lower ester such as methyl acetate, ethyl acetate or butyl acetate; or an ether such as dioxane, ethylene glycol monomethyl ether or ethylene glycol monoethyl ether; these solvents may be employed in the form of a mixture thereof.

There may be further incorporated therein a wide variety of useful additives such as a dispersing agent to supplement the dispersibility of the stimulable phosphor in the coating liquid, and a plasticizer to ensure adhesion of the said phosphor particles with said binder after coating and drying.

As the dispersing agent, there may be mentioned, for example, phthalic acid, stearic acid, caproic acid or a lipophilic surface active agent.

As the plasticizer, there may be mentioned, for example, a phosphoric acid ester such as triphenyl phosphate, tricresyl phosphate or diphenyl phosphate; a phthalic acid ester such as diethyl phthalate or dimethoxyethyl phthalate; a glycolic acid ester such ethyl phthalylethyl glycolate or butyl phthalylbutyl glycolate; a polyethylene glycol-dibasic aliphatic acid polyester such as triethylene glycol-adipic acid polyester or diethylene glycol-succinic acid polyester.

The coating liquid prepared as above may be uniformly coated over a support according to any coating methods commonly applied such as a roll coater method or a blade doctor method to form the stimulable phosphor-containing layer.

As the support or base which may be employed for this invention, there may be mentioned, for example, various synthetic resin sheets (e.g., sheets of a cellulose acetate, a polyester, a polyethylene terephthalate, a polyamide, a polyimide, a triacetate or a polycarbonate), various metallic sheets (e.g., sheets of aluminum or aluminum alloy), various paper sheets (e.g., sheets of baryta paper, resin coated paper or pigment paper) and various glass sheets.

The dry thickness of said stimulable phosphor-containing layer may be varied depending upon the intended use of the radiation energy storage panel as well as the nature of the stimulable phosphor, the proportion of the binder to the stimulable phosphor; a thickness of 10 μm to 1000 μm is generally suitable with 80 μm to 600 μm being preferable.

Still further, it may be suitable for increasing image sharpness formed in the radiation energy storage panel 13 to have dispersed a white powder in the stimulable phosphor-containing layer as disclosed, for instance, in Japanese Provisional Patent Publication No. 146447/1980; it may be also suitable for increasing image sharpness of the stimulable phosphor-containing layer or absorbing a stimulable exciting light to make a proper coloration by having dispersed in the stimulable phosphor-containing layer a coloring agent capable of absorbing a stimulable exciting light as disclosed, for example in Japanese Provisional Patent Publication No. 163500/1980. Additionally, in order to improve sharpness and sensitivity of the radiation

energy storage panel 13, it may be suitable to place a photoreflective layer between the base and the stimulable phosphor-containing layer as disclosed in Japanese Provisional Patent Publication No. 11393/1981.

In the radiation energy storage panel, the phosphor layer may be provided over the support according to other methods, e.g., vacuum evaporation coating or sputtering. In this case, there is no need to apply a binder so that the packed density of the stimulable phosphor can be increased and one can obtain a favourable radiation energy storage panel with regard to sensitivity and resolving power thereof.

In Fig. 4, there is illustrated an emission spectrum from stimulation of the so-obtained phosphor of the formula [I],

$$(M_{1-x} \cdot M^{I}_{x})X \cdot aM^{II}X'_2 \cdot bM^{III}X''_3 \cdot cA{:}dB$$

according to this invention. Its practical formulation as as defined below.

(a) $RbBr \cdot 0.05BaFBr \cdot 0.01AlF_3{:}0.001Eu$

(b) $0.99RbBr \cdot 0.01CsF \cdot 0.05BaFCl \cdot 0.01LaF_3{:}0.001Tl$

(c) $CsBr \cdot 0.05BaFCl \cdot 0.01YF_3{:}0.002Tl$

These stimulable phosphors are irradiated with an X-ray of 80 KVp and the emission spectrum as shown is measured by exciting said phosphor with a semi-conductor laser having an oscillating wave length of 780 nm.

Also, Fig. 5 illustrates an excited spectrum of the present phosphor

$$M^{I}X \cdot aM^{II}X'_2 \cdot bM^{III}X''_3{:}cA$$

by stimulation. Said spectrum is an excited spectrum of each of the above-mentioned stimulable phosphors (a), (b) and (c) by stimulation.

On the other hand, Figs. 6 and 7 illustrate stimulable emission spectra of the present phosphors represented by the formula [I'],

$$(M_{1-x} \cdot M^{I}_{x})X \cdot aM^{II}X'_2 \cdot bM^{III}X''_2{:}cTl{:}dA,$$

respectively. Their practical formulations are as defined below.

(d) $0.98CsBr \cdot 0.02RbI{:}0.002Tl$

(e) $0.97RbBr \cdot 0.03CsF{:}0.002Tl$

Said phosphors are irradiated with X-ray of 80 KVp and the emission spectrum as shown is measured by exciting said phosphor with a semi-conductor laser having an oscillation wavelength of 780 nm.

Further, Figs. 8 and 9 show the stimulable emission spectra of the present phosphors,

$$(M_{1-x} \cdot M^{I}_{x})X \cdot aM^{II}X'_2 \cdot bM^{III}X''_2{:}cTl{:}dA,$$

which spectra are stimulable excited spectra of said phosphors irradiated with X-ray of 80 KVp.

## Examples

This invention will be more fully illustrated by way of the following examples.

### Example 1

Each of stimulable phosphor raw materials as shown below as items (1)—(53) was weighed and admixed well by means of a ball mill to prepare 53 kinds of mixtures of phosphor materials.

| | | | |
|---|---|---|---|
| (1) | RbBr | 163.7 g | (0.99 mole) |
| | CsF | 1.52 g | (0.01 mole) |
| | TlBr | 0.284 g | (0.001 mole) |
| (2) | CsBr | 210.7 g | (0.99 mole) |
| | CsF | 1.52 g | (0.01 mole) |
| | TlBr | 0.284 g | (0.001 mole) |
| (3) | RbBr | 82.7 g | (0.5 mole) |
| | CsBr | 106.4 g | (0.5 mole) |
| | CsF | 1.52 g | (0.01 mole) |
| | TlBr | 0.284 g | (0.001 mole) |
| (4) | RbCl | 120.9 g | (1 mole) |
| | $CaF_2$ | 7.81 g | (0.1 mole) |
| | $AlF_3$ | 0.840 g | (0.01 mole) |
| | $Eu_2O_3$ | 0.176 g | (0.0005 mole) |

| | | |
|---|---|---|
| (5) RbBr | 165.4 g | (1 mole) |
| $Eu_2O_3$ | 0.176 g | (0.0005 mole) |
| (6) RbBr | 165.4 g | (1 mole) |
| $Eu_2O_3$ | 0.176 g | (0.0005 mole) |
| $Tb_4O_7$ | 0.0748 g | (0.0001 mole) |
| (7) RbBr | 165.4 g | (1 mole) |
| TlBr | 0.284 g | (0.001 mole) |
| (8) RbBr | 165.4 g | (1 mole) |
| TlBr | 0.284 g | (0.001 mole) |
| NaBr | 0.0206 g | (0.0002 mole) |
| (9) RbBr | 165.4 g | (1 mole) |
| $BaF_2$ | 17.54 g | (0.1 mole) |
| $AlF_3$ | 0.840 g | (0.01 mole) |
| TlBr | 0.284 g | (0.001 mole) |
| (10) RbBr | 157.1 g | (0.95 mole) |
| CsF | 7.60 g | (0.05 mole) |
| $BaF_2$ | 17.54 g | (0.1 mole) |
| $AlF_3$ | 0.840 g | (0.01 mole) |
| $Tl_2O$ | 0.212 g | (0.0005 mole) |
| (11) RbBr | 157.1 g | (0.95 mole) |
| LiI | 6.69 g | (0.05 mole) |
| $BaF_2$ | 17.54 g | (0.1 mole) |
| $AlF_3$ | 0.840 g | (0.01 mole) |
| $Tl_2O_3$ | 0.228 g | (0.0005 mole) |
| (12) RbI | 212.4 g | (1 mole) |
| $MgF_2$ | 62.31 g | (0.1 mole) |
| $AlF_3$ | 0.840 g | (0.01 mole) |
| $Eu_2O_3$ | 0.176 g | (0.0005 mole) |
| (13) CsF | 151.9 g | (1 mole) |
| $BaF_2$ | 17.54 g | (0.1 mole) |
| $LaF_2$ | 1.96 g | (0.01 mole) |
| $EuF_3$ | 0.209 g | (0.001 mole) |
| (14) CsBr | 212.8 g | (1 mole) |
| $Eu_2O_3$ | 0.176 g | (0.0005 mole) |
| (15) CsBr | 212.8 g | (1 mole) |
| $Tl_2O$ | 0.212 g | (0.0005 mole) |
| (16) CsBr | 212.8 g | (1 mole) |
| $BaF_2$ | 17.54 g | (0.1 mole) |
| $Tl_2O$ | 0.212 g | (0.0005 mole) |
| (17) CsBr | 212.8 g | (1 mole) |
| $BaBr_2$ | 29.71 g | (0.1 mole) |
| $Tl_2O$ | 0.212 g | (0.0005 mole) |
| (18) CsBr | 212.8 g | (1 mole) |
| $YCl_3$ | 0.976 g | (0.005 mole) |
| $Tl_2O$ | 0.212 g | (0.0005 mole) |
| (19) CsBr | 212.8 g | (1 mole) |
| $YCl_3$ | 19.53 g | (0.1 mole) |
| $Tl_2O$ | 0.212 g | (0.0005 mole) |

| | | | |
|---|---|---|---|
| (20) | CsBr | 212.8 g | (1 mole) |
| | $YCl_3$ | 78.11 g | (0.4 mole) |
| | $Tl_2O$ | 0.212 g | (0.0005 mole) |
| (21) | NaI | 149.9 g | (1 mole) |
| | $BaF_2$ | 17.54 g | (0.1 mole) |
| | $YF_3$ | 1.464 g | (0.01 mole) |
| | $Eu_2O_3$ | 0.176 g | (0.0005 mole) |
| (22) | KBr | 119.0 g | (1 mole) |
| | $BaF_2$ | 17.54 g | (0.1 mole) |
| | $YF_3$ | 1.46 g | (0.01 mole) |
| | $Eu_2O_3$ | 0.176 g | (0.0005 mole) |
| (23) | KI | 166.0 g | (1 mole) |
| | $BaF_2$ | 17.54 g | (0.1 mole) |
| | $AlF_3$ | 0.840 g | (0.01 mole) |
| | $Eu_2O_3$ | 0.176 g | (0.0005 mole) |
| (24) | RbBr | 165.4 g | (1 mole) |
| | $BaF_2$ | 17.54 g | (0.1 mole) |
| | $BaBr_2 \cdot 2H_2O$ | 33.31 g | (0.1 mole) |
| | $Eu_2O_3$ | 0.176 g | (0.0005 mole) |
| (25) | RbBr | 165.4 g | (1 mole) |
| | $BaF_2$ | 17.54 g | (0.1 mole) |
| | $BaBr_2 \cdot 2H_2O$ | 33.31 g | (0.1 mole) |
| | $Tl_2O$ | 0.212 g | (0.0005 mole) |
| (26) | RbBr | 165.4 g | (1 mole) |
| | $BaF_2$ | 26.31 g | (0.15 mole) |
| | $BaBr_2 \cdot 2H_2O$ | 49.97 g | (0.15 mole) |
| | $Tl_2O$ | 0.424 g | (0.001 mole) |
| (27) | RbBr | 165.4 g | (1 mole) |
| | $BaF_2$ | 26.31 g | (0.15 mole) |
| | $BaCl_2$ | 31.23 g | (0.15 mole) |
| | NaF | 0.0084 g | (0.0002 mole) |
| (28) | TbI | 212.4 g | (1 mole) |
| | $MgF_2$ | 62.31 g | (0.1 mole) |
| | $AlF_3$ | 0.840 g | (0.01 mole) |
| | $Eu_2O_3$ | 0.176 g | (0.0005 mole) |
| (29) | CsBr | 212.8 g | (1 mole) |
| | $BaF_2$ | 17.54 g | (0.1 mole) |
| | $BaBr_2$ | 29.71 g | (0.1 mole) |
| | $Tl_2O$ | 0.212 g | (0.0005 mole) |
| (30) | CsBr | 212.8 g | (1 mole) |
| | $BaF_2$ | 17.54 g | (0.1 mole) |
| | $BaCl_2$ | 20.82 g | (0.1 mole) |
| | $Tl_2O$ | 0.212 g | (0.0005 mole) |
| (31) | RbBr | 160.4 g | (0.97 mole) |
| | CsF | 4.56 g | (0.03 mole) |
| | TlBr | 0.0568 g | (0.0002 mole) |
| (32) | RbBr | 160.4 g | (0.97 mole) |
| | CsF | 4.56 g | (0.03 mole) |
| | TlBr | 0.568 g | (0.002 mole) |
| (33) | RbBr | 160.4 g | (0.97 mole) |
| | CsF | 4.56 g | (0.03 mole) |
| | TlBr | 5.68 g | (0.02 mole) |

| | | | |
|---|---|---|---|
| (34) | RbBr | 165.4 g | (1 mole) |
| | $BaF_2$ | 17.54 g | (0.1 mole) |
| | $AlF_3$ | 0.840 g | (0.01 mole) |
| | TlBr | 0.568 g | (0.002 mole) |
| (35) | RbBr | 157.1 g | (0.95 mole) |
| | CsF | 7.60 g | (0.05 mole) |
| | $BaF_2$ | 17.54 g | (0.1 mole) |
| | $AlF_3$ | 0.840 g | (0.01 mole) |
| | $Tl_2O$ | 0.424 g | (0.001 mole) |
| (36) | RbBr | 165.4 g | (1 mole) |
| | $BaF_2$ | 17.54 g | (0.1 mole) |
| | $AlF_3$ | 0.840 g | (0.01 mole) |
| | TlBr | 0.568 g | (0.002 mole) |
| | NaBr | 0.0412 g | (0.0004 mole) |
| (37) | RbI | 212.4 g | (1 mole) |
| | $MgF_2$ | 6.23 g | (0.1 mole) |
| | $LaF_3$ | 1.96 g | (0.01 mole) |
| | AgI | 0.470 g | (0.002 mole) |
| (38) | CsF | 151.9 g | (1 mole) |
| | TlF | 0.447 g | (0.002 mole) |
| (39) | CsBr | 212.8 g | (1 mole) |
| | NaBr | 0.0206 g | (0.0002 mole) |
| (40) | CsBr | 212.8 g | (1 mole) |
| | NaBr | 0.206 g | (0.002 mole) |
| (41) | CsBr | 212.8 g | (1 mole) |
| | NaBr | 2.06 g | (0.02 mole) |
| (42) | CsBr | 212.8 g | (1 mole) |
| | $BaCl_2$ | 20.82 g | (0.1 mole) |
| | $YF_3$ | 1.46 g | (0.01 mole) |
| | NaBr | 0.206 g | (0.002 mole) |
| (43) | CsBr | 202.2 g | (0.95 mole) |
| | RbI | 10.62 g | (0.05 mole) |
| | $BaCl_2$ | 20.82 g | (0.1 mole) |
| | $YF_3$ | 1.46 g | (0.01 mole) |
| | NaBr | 0.206 g | (0.002 mole) |
| (44) | CsBr | 208.5 g | (0.98 mole) |
| | RbI | 4.25 g | (0.02 mole) |
| | TlBr | 0.568 g | (0.002 mole) |
| (45) | RbBr | 165.4 g | (1 mole) |
| | $BaF_2$ | 17.54 g | (0.1 mole) |
| | $AlF_3$ | 0.840 g | (0.01 mole) |
| | $SiO_2$ | 0.601 g | (0.01 mole) |
| | TlBr | 0.568 g | (0.002 mole) |
| (46) | RbBr | 165.4 g | (1 mole) |
| | $BaF_2$ | 17.54 g | (0.1 mole) |
| | $AlF_3$ | 0.840 g | (0.01 mole) |
| | $SiO_2$ | 3.004 g | (0.05 mole) |
| | TlBr | 0.568 g | (0.002 mole) |
| (47) | RbBr | 165.4 g | (1 mole) |
| | $BaF_2$ | 17.54 g | (0.1 mole) |
| | $AlF_3$ | 0.840 g | (0.01 mole) |
| | $SiO_2$ | 6.009 g | (0.1 mole) |
| | TlBr | 0.568 g | (0.002 mole) |

| | | | |
|---|---|---|---|
| (48) | RbBr | 165.4 g | (1 mole) |
| | $BaF_2$ | 17.54 g | (0.1 mole) |
| | $AlF_3$ | 0.840 g | (0.01 mole) |
| | $SiO_2$ | 24.03 g | (0.4 mole) |
| | TlBr | 0.568 g | (0.002 mole) |
| (49) | CsBr | 212.8 g | (1 mole) |
| | $BaCl_2$ | 20.82 g | (0.1 mole) |
| | $YF_3$ | 1.46 g | (0.01 mole) |
| | $Al_2O_3$ | 1.020 g | (0.01 mole) |
| | NaBr | 0.206 g | (0.002 mole) |
| (50) | CsBr | 212.8 g | (1 mole) |
| | $BaCl_2$ | 20.82 g | (0.1 mole) |
| | $YF_3$ | 1.46 g | (0.01 mole) |
| | $Al_2O_3$ | 5.098 g | (0.05 mole) |
| | NaBr | 0.206 g | (0.002 mole) |
| (51) | CsBr | 212.8 g | (1 mole) |
| | $BaCl_2$ | 20.82 g | (0.1 mole) |
| | $YF_3$ | 1.46 g | (0.01 mole |
| | $Al_2O_3$ | 10.20 g | (0.1 mole) |
| | NaBr | 0.206 g | (0.002 mole) |
| (52) | CsBr | 212.8 g | (1 mole) |
| | $BaCl_2$ | 20.82 g | (0.1 mole) |
| | $YF_3$ | 1.46 g | (0.01 mole) |
| | $Al_2O_3$ | 40.78 g | (0.4 mole) |
| | NaBr | 0.206 g | (0.002 mole) |
| (53) | RbI | 212.4 g | (1 mole) |
| | $MgF_2$ | 62.31 g | (0.1 mole) |
| | $AlF_3$ | 0.840 g | (0.01 mole) |
| | MgO | 2.016 g | (0.05 mole) |
| | $EuI_3$ | 0.533 g | (0.001 mole) |

Then, the above 53 kinds of the stimulable phosphor mixtures were packed into a quartz boat and baked in an electric furnace. Baking was carried out at 650°C for 2 hours under a stream of nitrogen gas at a flow rate of 2500 cc/min and then the baked product was allowed to cool up to room temperature.

The resulting baked product was finely ground by means of a ball mill and passed through a sieve with 150 mesh for regulating particle diameter, thereby yielding the respective stimulable phosphors.

Then, radiation energy storage panels of the present invention were prepared by using said 53 kinds of stimulable phosphors. Each radiation energy storage panel was prepared as follows.

First, 8 parts by weight of stimulable phosphor were dispersed in 1 part by weight of polyvinyl butyral (a binder) by using a solvent composed of a mixture of equal volumes of acetone and ethyl acetate, and the resulting dispersion was uniformly coated over a polyethylene telephthalate film (a support) kept horizontally by using a wire bar and allowed to age, thereby forming a radiation energy storage panel of the present invention having a film thickness of about 300 µm.

These 53 kinds of the radiation energy storage panels of the present invention were each irradiated with X-rays having a tube voltage of 80 KVp and a tube current of 100 mA for 0.1 second at a distance of 100 cm from the focus of an X-ray tube and then excited with a semi-conductor laser of 780 nm and 10 mW. Fluorescence emitted by stimulation from the stimulable phosphor-containing layer was measured by means of a photodetector. The results are summarized in Table 1.

Comparative Example 1

Following the same procedures as in Example 1 except that 175.4 g (1 mole) of $BaF_2$, 333.3 g (1 mole) of $BaBr_2 \cdot 2H_2O$ and 0.352 g (0.001 mole) of $Eu_2O_3$ were used as a raw material for stimulable phosphor, there was obtained a stimulable phosphor BaFBr:0.001Eu. A comparative radiation energy storage panel was prepared from the stimulable phosphor in the same manner as in Example 1 and a stimulable emission luminance was measured by using a semi-conductor laser (780 nm, 10 mW). The results are also shown in Table 1.

Comparative Example 2

Following the same procedures as in Comparative Example 1 except that an He-Ne laser (633 nm, 10 mW) was applied instead of the semi-conductor laser, one measured stimulable emission luminance.

The results are also shown in Table 1.

Reference Example 1

Following exactly the same procedures as in Example 1 except that the metal oxide components $SiO_2$, $Al_2O_3$, MgO and $TiO_2$ were omitted in turn from the raw materials of stimulable phosphor samples of Example 1 (45), (49), (52) and (53), respectively, there were prepared the following reference samples (1), (2), (3) and (4) corresponding to the samples (1), (5), (9) and (10), the stimulable emission luminance of which was measured by means of a semi-conductor laser (780 nm, 10 mW). The results are also shown in Table 1.

Reference sample (1): $RbBr \cdot 0.1BaF_2 \cdot 0.01AlF_3{:}0.002Tl$
Reference sample (2): $CsBr \cdot 0.1BaCl_2 \cdot 0.01YF_3{:}0.002Na$
Reference sample (3): $RbI \cdot 0.1MgF_2 \cdot 0.01AlF_3{:}0.001Eu$

TABLE 1

| | Composition of phosphor | Exciting wave length | Relative emission strength by stimulation |
|---|---|---|---|
| Comparative Example 1 | BaFBr:Eu | 780 nm | 1 |
| Comparative Example 2 | BaFBr:Eu | 633 nm | 38 |
| Example 1 (1) | $0.99RbBr \cdot 0.01CsF \cdot 0.001Tl$ | 780 nm | 300 |
| Example 1 (2) | $0.99CsBr \cdot 0.01CsF \cdot 0.001Tl$ | 780 nm | 120 |
| Example 1 (3) | $0.5RbBr \cdot 0.5CsBr \cdot 0.01CsF{:}0.001Tl$ | 780 nm | 250 |
| Example 1 (4) | $RbCl \cdot 0.1CaF_2 \cdot 0.01AlF_3{:}0.001Eu$ | 780 nm | 62 |
| Example 1 (5) | RbBr:0.001Eu | 780 nm | 80 |
| Example 1 (6) | $RbBr{:}0.001Eu \cdot 0.0004Tb$ | 780 nm | 88 |
| Example 1 (7) | RbBr:0.001Tl | 780 nm | 96 |
| Example 1 (8) | $RbBr{:}0.001Tl \cdot 0.0002Na$ | 780 nm | 102 |
| Example 1 (9) | $RbBr{:}0.1BaF_2 \cdot 0.01AlF_3{:}0.001Tl$ | 780 nm | 110 |
| Example 1 (10) | $0.95RbBr \cdot 0.05CsF \cdot 0.01BaF_2 \cdot 0.01AlF_3{:}0.001Tl$ | 780 nm | 205 |
| Example 1 (11) | $0.95RbBr \cdot 0.5LiI \cdot 0.1BaF_2 \cdot 0.01AlF_3{:}0.001Tl$ | 780 nm | 180 |
| Example 1 (12) | $RbI \cdot 0.1MgF_2 \cdot 0.01AlF_3{:}0.001Eu$ | 780 nm | 72 |
| Example 1 (13) | $CsF \cdot 0.1BaF_2 \cdot 0.01LaF_3{:}0.001Eu$ | 780 nm | 60 |
| Example 1 (14) | CsBr:0.001Eu | 780 nm | 72 |
| Example 1 (15) | CsBr:0.001Tl | 780 nm | 88 |
| Example 1 (16) | $CsBr \cdot 0.1BaBr_2{:}0.001Tl$ | 780 nm | 98 |
| Example 1 (17) | $CsBr \cdot 0.4BaBr_2{:}0.001Tl$ | 780 nm | 90 |
| Example 1 (18) | $CsBr \cdot 0.005YCl_3{:}0.001Tl$ | 780 nm | 112 |
| Example 1 (19) | $CsBr \cdot 0.1YCl_3{:}0.001Tl$ | 780 nm | 96 |
| Example 1 (20) | $CsBr \cdot 0.4YCl_3{:}0.001Tl$ | 780 nm | 90 |

TABLE 1 (contd.)

| | Composition of phosphor | Exciting wave length | Relative emission strength by stimulation |
|---|---|---|---|
| Example 1 (21) | $NaI \cdot 0.1BaF_2 \cdot 0.01YF_3$:0.001Eu | 780 nm | 56 |
| Example 1 (22) | $KBr \cdot 0.1BaF_2 \cdot 0.01YF_3$:0.001Eu | 780 nm | 50 |
| Example 1 (23) | $KI \cdot 0.1BaF_2 \cdot 0.01AlF_3$:0.001Eu | 780 nm | 58 |
| Example 1 (24) | RbBr · 0.2BaFBr:0.001Eu | 780 nm | 82 |
| Example 1 (25) | RbBr · 0.2BaFBr:0.001Tl | 780 nm | 92 |
| Example 1 (26) | RbBr · 0.3BaFBr:0.002Tl | 780 nm | 90 |
| Example 1 (27) | RbBr · 0.3BaFCl:0.0002Na | 780 nm | 66 |
| Example 1 (28) | $RbI \cdot 0.1MgF_2 \cdot 0.01AlF_3$:0.001Eu | 780 nm | 72 |
| Example 1 (29) | CsBr · 0.2BaFB4:0.001Tl | 780 nm | 100 |
| Example 1 (30) | CsBr · 0.2BaFCl:0.001Tl | 780 nm | 94 |
| Example 1 (31) | 0.97RbBr · 0.03CsF · 0.0002Tl | 780 nm | 124 |
| Example 1 (32) | 0.97RbBr · 0.03CsF · 0.002Tl | 780 nm | 196 |
| Example 1 (33) | 0.97RbBr · 0.03CsF · 0.02Tl | 780 nm | 118 |
| Example 1 (34) | $RbBr \cdot 0.1BaF_2 \cdot 0.01AlF_3$:0.002Tl | 780 nm | 116 |
| Example 1 (35) | $0.95RbBr \cdot 0.05CsF \cdot 0.1BaF_2 \cdot 0.01AlF_3$:0.002Tl | 780 nm | 205 |
| Example 1 (36) | $RbBr \cdot 0.1BaF_2 \cdot 0.01AlF_3$:0.002Tl · 0.0004Na | 780 nm | 133 |
| Example 1 (37) | $RbI \cdot 0.1MgF_2 \cdot 0.01LaF_3$:0.002Ag | 780 nm | 53 |
| Example 1 (38) | CsF:0.002Tl | 780 nm | 75 |
| Example 1 (39) | CsBr:0.0002Na | 780 nm | 55 |
| Example 1 (40) | CsBr:0.002Na | 780 nm | 82 |
| Example 1 (41) | CsBr:0.02Na | 780 nm | 61 |
| Example 1 (42) | $CsBr:0.1BaCl_2 \cdot 0.01YF_3$:0.002Na | 780 nm | 90 |
| Example 1 (43) | $0.95CsBr \cdot 0.05RbI \cdot 0.1BaCl_2 \cdot 0.01YF_3$:0.002Na | 780 nm | 157 |
| Example 1 (44) | 0.98CsBr · 0.02RbI:0.002Tl | 780 nm | 180 |
| Reference Example (1) | $RbBr \cdot 0.1BaF_2 \cdot 0.01AlF_3$:0.002Tl | 780 nm | 104 |
| Example 1 (45) | $RbBr \cdot 0.1BaF_2 \cdot 0.01AlF_3:0.01SiO_2$:0.002Tl | 780 nm | 152 |
| Example 1 (46) | $RbBr \cdot 0.1BaF_2 \cdot 0.01AlF_3:0.05SiO_2$:0.002Tl | 780 nm | 145 |
| Example 1 (47) | $RbBr \cdot 0.1BaF_2 \cdot 0.01AlF_3:0.1SiO_2$:0.02Tl | 780 nm | 121 |
| Example 1 (48) | $RbBr \cdot 0.1BaF_2 \cdot 0.01AlF_3:0.4SiO_2$:0.002Tl | 780 nm | 107 |

TABLE 1 (contd.)

| | Composition of phosphor | Exciting wave length | Relative emission strength by stimulation |
|---|---|---|---|
| Reference Example (2) | $CsBr{:}0.1BaCl_2 \cdot 0.01YF_3{:}0.002Na$ | 780 nm | 88 |
| Example 1 (49) | $CsBr{:}0.1BaCl_2 \cdot 0.01YF_3 \cdot 0.01Al_2O_3{:}0.002Na$ | 780 nm | 131 |
| Example 1 (50) | $CsBr{:}0.1BaCl_2 \cdot 0.01YF_3 \cdot 0.05Al_2O_3{:}0.002Na$ | 780 nm | 123 |
| Example 1 (51) | $CsBr{:}0.1BaCl_2 \cdot 0.01YF_3 \cdot 0.1Al_2O_3{:}0.002Na$ | 780 nm | 101 |
| Example 1 (52) | $CsBr{:}0.1BaCl_2 \cdot 0.01YF_3 \cdot 0.4Al_2O_3{:}0.002Na$ | 780 nm | 94 |
| Reference Example (3) | $RbI \cdot 0.1MgF_2 \cdot 0.01AlF_3{:}0.001Eu$ | 780 nm | 73 |
| Example 1 (53) | $RbI \cdot 0.1MgF_2 \cdot 0.01AlF_3 \cdot 0.05MgO{:}0.001Eu$ | 780 nm | 96 |

As is apparent from the above Table 1, the present radiation energy storage panel as prepared from the stimulable phosphors of the above samples (1) to (53) showed a higher emission luminance by stimulation than that of the comparative radiation energy storage panel measured under the same conditions, said comparative panel being prepared from the prior art stimulable phosphor BaFBr:Eu as shown in the above Comparative Example 1; hence the method for converting a radiographic image of this invention using the radiation energy storage panel of this invention showed a higher sensitivity than the prior art method for converting a radiographic image using the comparative radiation energy storage panel.

The prior stimulable phosphor BaFBr:Eu of Comparative Example 1 showed a peak wave length at approximately 600 nm in the stimulable excited spectrum; it is said that He-Ne laser light (633 nm) was particularly preferable as an exciting light source [see Japanese Provisional Patent Publication No. 15025/1980 and others]. Accordingly, the comparative radiation energy storage panel prepared from BaFBr:Eu was measured for the said stimulable emission luminance under the same conditions as used in the above-mentioned method except that an He-Ne laser (633 nm) was used instead of the semi-conductor laser (780 nm). The results in terms of Comparative Example 2 are shown in the above Table 1, which reveal that the comparative radiation energy storage panel showed a lower stimulable emission luminance than those of all the radiation energy storage panels of this invention. Therefore, the method for converting a radiographic image using the radiation energy storage panel of this invention can utilize as an exciting light source a semi-conductor laser so that the method may be effected in a more miniaturized state with a higher sensitivity, as compared with the prior method for converting a radiographic image using the He-Ne laser.

Example 2

Each phosphor raw material as shown in the following items (54) to (85) was weighed and admixed well by means of a ball mill to prepare 35 kinds of mixtures of phosphor raw materials.

| | | | |
|---|---|---|---|
| (54) | CsBr | 202.2 g | (0.95 mole) |
| | CsI | 12.99 g | (0.05 mole) |
| | TlBr | 0.568 g | (0.002 mole) |
| (55) | CsBr | 202.2 g | (0.95 mole) |
| | CsI | 12.99 g | (0.05 mole) |
| | TlBr | 0.568 g | (0.002 mole) |
| | NaBr | 0.0412 g | (0.0004 mole) |
| (56) | CsBr | 202.2 g | (0.95 mole) |
| | CsI | 12.99 g | (0.05 mole) |
| | TlBr | 0.568 g | (0.002 mole) |
| | AgBr | 0.0751 g | (0.0004 mole) |

| | | | |
|---|---|---|---|
| (57) | CsBr | 202.2 g | (0.95 mole) |
| | CsI | 12.99 g | (0.05 mole) |
| | TlBr | 0.568 g | (0.002 mole) |
| | $Eu_2O_3$ | 0.0704 g | (0.0002 mole) |
| (58) | CsBr | 206.4 g | (0.97 mole) |
| | RbI | 6.372 g | (0.03 mole) |
| | TlBr | 0.568 g | (0.002 mole) |
| (59) | CsBr | 191.5 g | (0.9 mole) |
| | RbI | 21.24 g | (0.1 mole) |
| | TlBr | 0.568 g | (0.002 mole) |
| (60) | CsBr | 106.4 g | (0.5 mole) |
| | RbI | 106.2 g | (0.5 mole) |
| | TlBr | 0.568 g | (0.002 mole) |
| (61) | CsBr | 191.5 g | (0.9 mole) |
| | RbI | 21.24 g | (0.1 mole) |
| | $BaF_2$ | 17.54 g | (0.1 mole) |
| | $YF_3$ | 1.46 g | (0.01 mole) |
| | TlBr | 0.568 g | (0.002 mole) |
| (62) | CsBr | 191.5 g | (0.9 mole) |
| | RbI | 21.24 g | (0.1 mole) |
| | $BaF_2$ | 17.54 g | (0.1 mole) |
| | $LaF_3$ | 1.96 g | (0.01 mole) |
| | $Tl_2O$ | 0.424 g | (0.001 mole) |
| (63) | CsBr | 191.5 g | (0.9 mole) |
| | NaI | 14.99 g | (0.1 mole) |
| | TlBr | 0.568 g | (0.002 mole) |
| (64) | CsBr | 191.5 g | (0.9 mole) |
| | NaI | 14.99 g | (0.1 mole) |
| | $BaCl_2$ | 20.82 g | (0.1 mole) |
| | $AlF_3$ | 0.840 g | (0.01 mole) |
| | TlBr | 0.568 g | (0.002 mole) |
| (65) | CsBr | 191.5 g | (0.9 mole) |
| | KBr | 11.90 g | (0.1 mole) |
| | $Tl_2O$ | 0.424 g | (0.001 mole) |
| (66) | CsBr | 191.5 g | (0.9 mole) |
| | NaCl | 5.84 g | (0.1 mole) |
| | $Tl_2O$ | 0.424 g | (0.001 mole) |
| (67) | CsBr | 191.5 g | (0.9 mole) |
| | LiF | 2.59 g | (0.1 mole) |
| | $Tl_2O$ | 0.424 g | (0.001 mole) |
| (68) | CsCl | 151.5 g | (0.9 mole) |
| | LiF | 2.59 g | (0.1 mole) |
| | $Tl_2O$ | 0.424 g | (0.001 mole) |
| (69) | RbBr | 165.4 g | (1 mole) |
| | TlBr | 0.568 g | (0.002 mole) |
| (70) | RbBr | 165.4 g | (1 mole) |
| | TlBr | 0.568 g | (0.002 mole) |
| | NaBr | 0.0412 g | (0.0004 mole) |
| (71) | RbBr | 165.4 g | (1 mole) |
| | TlBr | 0.568 g | (0.002 mole) |
| | AgBr | 0.0751 g | (0.0004 mole) |

| | | | |
|---|---|---|---|
| (72) | RbBr | 165.4 g | (1 mole) |
| | TlBr | 0.568 g | (0.002 mole) |
| | $Eu_2O_3$ | 0.0704 g | (0.0002 mole) |
| (73) | RbBr | 160.4 g | (0.97 mole) |
| | CsF | 4.56 g | (0.03 mole) |
| | TlBr | 0.568 g | (0.002 mole) |
| (74) | RbBr | 148.9 g | (0.9 mole) |
| | CsF | 15.19 g | (0.1 mole) |
| | TlBr | 0.568 g | (0.002 mole) |
| (75) | RbBr | 115.8 g | (0.7 mole) |
| | CsF | 45.57 g | (0.3 mole) |
| | TlBr | 0.568 g | (0.002 mole) |
| (76) | RbBr | 148.9 g | (0.9 mole) |
| | CsF | 15.19 g | (0.1 mole) |
| | $BaF_2$ | 17.54 g | (0.1 mole) |
| | $AlF_3$ | 0.840 g | (0.01 mole) |
| | TlBr | 0.568 g | (0.002 mole) |
| (77) | RbBr | 148.9 g | (0.9 mole) |
| | CsF | 15.19 g | (0.1 mole) |
| | $BaCl_2$ | 20.82 g | (0.1 mole) |
| | $YF_3$ | 1.46 g | (0.01 mole) |
| | $Tl_2O$ | 0.424 g | (0.001 mole) |
| (78) | RbBr | 148.9 g | (0.9 mole) |
| | CsI | 25.98 g | (0.1 mole) |
| | TlBr | 0.568 g | (0.002 mole) |
| (79) | RbBr | 148.9 g | (0.9 mole) |
| | RbI | 21.24 g | (0.1 mole) |
| | $Tl_2O$ | 0.424 g | (0.001 mole) |
| (80) | RbBr | 148.9 g | (0.9 mole) |
| | RbI | 21.24 g | (0.1 mole) |
| | $BaF_2$ | 17.54 g | (0.1 mole) |
| | $LaF_3$ | 1.96 g | (0.01 mole) |
| | TlBr | 0.568 g | (0.002 mole) |
| (81) | RbBr | 148.9 g | (0.9 mole) |
| | KBr | 11.90 g | (0.1 mole) |
| | $Tl_2O$ | 0.424 g | (0.001 mole) |
| (82) | RbBr | 148.9 g | (0.9 mole) |
| | NaCl | 5.84 g | (0.1 mole) |
| | $Tl_2O$ | 0.424 g | (0.001 mole) |
| (83) | RbBr | 148.9 g | (0.9 mole) |
| | LiF | 2.59 g | (0.1 mole) |
| | $Tl_2O$ | 0.424 g | (0.001 mole) |
| (84) | RbF | 85.02 g | (0.9 mole) |
| | CsBr | 21.28 g | (0.1 mole) |
| | $Tl_2O$ | 0.424 g | (0.001 mole) |
| (85) | RbCl | 108.8 g | (0.9 mole) |
| | LiF | 2.59 g | (0.1 mole) |
| | $Tl_2O$ | 0.424 g | (0.001 mole) |

Then, the above 32 kinds of mixtures of phosphor raw materials were packed in a quartz boat and baked in an electric furnace. Baking was carried out at 650°C for 2 hours under a nitrogen gas stream at a flow rate of 2500 cc/min and then the baked product was allowed to cool to room temperature.

The resulting baked product was finely ground by means of a ball mill and passed through a sieve with 150 mesh for regulating pacticle size to give the phosphor samples (54) to (85).

The phosphor samples (54) to (85) were each packed into a measurement holder and each holder was irradiated with X-rays having a tube voltage of 80 KVp and a tube current of 100 mA for 0.1 second at a distance of 100 cm from the focus of the X-ray tube and then excited with an He-Ne laser light of 10 mW (633 nm, 10 nm) and the fluorescence emitted by stimulation from the phosphor was measured by means of a photodetector. The results are shown in Table 2.

Comparative Example 3

Following the same procedures as in Example 2 except that 74.56 g (1 mole) of KCl and 0.424 g (0.001 molep of $Tl_2O$ were used as a phosphor raw material, there was obtained a phosphor KCl:0.002Tl. In the same manner as in Example 2, a comparative sample (3) was prepared from said phosphor material and a stimulable emission luminance was measured by means of an He-Ne laser (633 nm, 100 mW). The results are also shown in Table 2.

TABLE 2

| | Composition of phosphor | Emission luminance by stimulation λex=633 nm |
|---|---|---|
| Comparative Sample (3) | KCl:0.002Tl | 1 |
| Sample (54) | 0.95CsBr · 0.05CsI:0.002Tl | 122 |
| Sample (55) | 0.95CsBr · 0.05CsI:0.002Tl · 0.0004Na | 146 |
| Sample (56) | 0.95CsBr · 0.05CsI:0.002Tl · 0.0004Ag | 137 |
| Sample (57) | 0.95CsBr · 0.05CsI:0.002Tl · 0.0004Eu | 141 |
| Sample (58) | 0.97CsBr · 0.03RbI:0.002Tl | 153 |
| Sample (59) | 0.9CsBr · 0.1RbI:0.002Tl | 102 |
| Sample (60) | 0.7CsBr · 0.3RbI:0.002Tl | 78 |
| Sample (61) | 0.9CsBr · 0.1RbI · 0.1$BaF_2$ · 0.01$YF_3$:0.002Tl | 118 |
| Sample (62) | 0.9CsBr · 0.1RbI · 0.1$BaF_2$ · 0.01$LaF_3$:0.002Tl | 113 |
| Sample (63) | 0.9CsBr · 0.1NaI:0.002Tl | 86 |
| Sample (64) | 0.9CsBr · 0.1NaI · 0.1$BaCl_2$ · 0.01$AlF_3$:0.002Tl | 92 |
| Sample (65) | 0.9CsBr · 0.1KBr:0.002Tl | 72 |
| Sample (66) | 0.9CsBr · 0.1NaCl:0.002Tl | 68 |
| Sample (67) | 0.9CsBr · 0.01LiF:0.002Tl | 73 |
| Sample (68) | 0.9CsCl · 0.1LiF:0.002Tl | 59 |
| Sample (69) | RbBr:0.002Tl | 80 |
| Sample (70) | RbBr:0.002Tl · 0.0004Na | 91 |
| Sample (71) | RbBr:0.002Tl · 0.0004Ag | 88 |
| Sample (72) | RbBr:0.002Tl · 0.0004Eu | 96 |
| Sample (73) | 0.97RbBr · 0.03CsF:0.002Tl | 205 |

TABLE 2 (contd.)

| | Composition of phosphor | Emission luminance by stimulation λex=633 nm |
|---|---|---|
| Sample (74) | $0.9RbBr \cdot 0.1CsF{:}0.002Tl$ | 176 |
| Sample (75) | $0.7RbBr \cdot 0.3CsF{:}0.002Tl$ | 124 |
| Sample (76) | $0.9RbBr \cdot 0.1CsF \cdot 0.1BaF_2 \cdot 0.01AlF_3{:}0.002Tl$ | 188 |
| Sample (77) | $0.9RbBr \cdot 0.1CsF \cdot 0.1BaCl_2 \cdot 0.01YF_3{:}0.002Tl$ | 185 |
| Sample (78) | $0.9RbBr \cdot 0.1CsI{:}0.002Tl$ | 147 |
| Sample (79) | $0.9RbBr \cdot 0.1RbI{:}0.002Tl$ | 142 |
| Sample (80) | $0.9RbBr \cdot 0.1RbI \cdot 0.1BaF_2 \cdot 0.01LaF_3{:}0.002Tl$ | 150 |
| Sample (81) | $0.9RbBr \cdot 0.1KBr{:}0.002Tl$ | 115 |
| Sample (82) | $0.9RbBr \cdot 0.1NaCl{:}0.002Tl$ | 108 |
| Sample (83) | $0.9RbBr \cdot 0.1LiF{:}0.002Tl$ | 121 |
| Sample (84) | $0.9RbF \cdot 0.1CsBr{:}0.001Tl$ | 80 |
| Sample (85) | $0.9RbCl \cdot 0.1LiF{:}0.001Tl$ | 75 |

As is apparent from Table 2, the emission luminance by stimulation of the above phosphor samples (54) to (85) showed a higher value, as compared with the value measured under the same conditions for the comparative sample (3) composed of the prior phosphor KCl:0.002Tl as shown in Comparative Example 3.

Example 3

The radiation energy storage panel using the stimulable phosphors (10) and (35) as prepared by Example 1 was irradiated with X-rays and then with an He-Ne laser for 10 µsec as an exciting light with a rectangularly variable strength. The change in luminance of the stimulable emission from the stimulable phosphor-containing layer was measured by means of a photodetector. Times required a luminance change from 10% to 90% in stimulable emission were determined as a response speed for exciting light of the stimulable phosphor; the results are shown in table 3.

Comparative Example 4

Following the same procedure as in Example 3 except that the comparative radiation energy storage panel prepared in Comparative Example 1 was applied instead of the present radiation energy storage panel (10), there was determined a response speed. The results are shown in Table 3.

TABLE 3

| | Composition of phosphor | Response speed (µsec) |
|---|---|---|
| Sample (10) | $0.95RbBr \cdot 0.05CsF \cdot 0.1BaF_2 \cdot 0.01AlF_3{:}0.001Tl$ | 0.7 |
| Sample (35) | $0.95RbBr \cdot 0.05CsF \cdot 0.1BaF_2 \cdot 0.01AlF_3{:}0.002Tl$ | 0.7 |
| Comparative Example 4 | BaFBr:Eu | 2.0 |

As is apparent from Table 3, the stimulable phosphor of this invention showed an approximately 3 times higher response speed, as compared with the comparative stimulable phosphor; thus the method for

converting radiographic image using the stimulable phosphor can provide a reading speed of a radiation image up to 3 times that using the prior stimulable phosphor.

Example 4

The present radiation energy storage panel employed in Example 3 was irradiated with X-rays in the same manner as in Example 1 and then accumulated energy was eliminated with a halogen lamp having 10,000 luxes over 10 seconds. Then, the panel was excited with an He-Ne laser (10 mW) and a stimulable emission luminance from the stimulable phosphor-containing layer was measured by means of a photodetector. The measured results are shown in Table 4 in terms of the emission luminance before elimination with the halogen lamp.

Comparative Example 5

Following the same procedures as in Example 4 except that the comparative radiation energy storage panel prepared by Comparative Example 1 was used instead of the radiation energy storage panel, there was measured the stimulable emission luminance. The results as measured are shown in Table 4 wherein the emission luminance before elimination with a halogen lamp is carried out in the same manner as in Example 4.

TABLE 4

| | Composition of phosphor | Emission luminance |
|---|---|---|
| Sample (10) | $0.95RbBr \cdot 0.05CsF \cdot 0.1BaF_2 \cdot 0.01AlF_3:0.001Tl$ | $5.1\times10^{-3}$ |
| Sample (35) | $0.95RbBr \cdot 0.05CsF \cdot 0.1BaF_2 \cdot 0.01AlF_3:0.002Tl$ | $5.1\times10^{-3}$ |
| Comparative Example 5 | BaFBr:Eu | $2.0\times10^{-2}$ |

As is apparent from Table 4, the present stimulable phosphor can show an approximately 4 times greater elimination speed of the accumulated energy (residual image) in comparison with that of the prior stimulable phosphor. Thus, the method for converting radiographic image using the stimulable phosphor of this invention can reduce the time for eliminating after image to 1/4, as compared with the comparative stimulable phosphor.

Example 5

The radiation energy storage panels using the present stimulable phosphor, sample (47) prepared in Example 1 and using the stimulable phosphor prepared in Comparative Example 1 were placed in a humid room set at 50°C and a relative humidity of 90% for a forced humidity test. This forced deterioration rate is at least 80 times, as compared with that seen generally in an air-conditioned X-ray chamber at 20°C and a relative humidity of 50%. Respective radiation energy storage panels were periodically taken out, irradiated with X-rays in the same manner as in Example 1, excited with a semi-conductor laser and then emission luminance by stimulation was measured at that time. An emission luminance by stimulation in the respective radiation energy storage panels is defined as 100 prior to the forced humidity test and represented in terms of a relative luminance thereto. A comparison of lowered emission luminances by stimulation with lapse of time was made and the results are shown in Fig. 10.

As is apparent from Fig. 10, the radiation energy storage panel using the stimulable phosphor of this invention is superior in water vapor resistance to the panel using the comparative stimulable phosphor and can greatly reduce the lowering in stimulable emission luminance with lapse of time.

As explained hereinabove, the stimulable phosphor of this invention can provide a remarkably increased emission luminance by stimulation, when irradiated with radiation and then stimulated and excited with either or both of visible rays and infrared rays, as compared with the prior alkali halide phosphor. Also, the present phosphor may exert an improvement in response characteristics of stimulable emission and afterflow of stimulation, when irradiated with radiation and then stimulated and excited with either or both of visible rays and infrared rays, in comparison with the prior alkali halide phosphor.

Accordingly, the present stimulable phosphor is useful, in particular, as a phosphor for a radiation energy storage panel.

Moreover, the present stimulable phosphor may exert a high sensitivity to radiation and hence, if the present method for converting radiographic image is utilized for X-ray diagnosis and others, the amount of X-rays exposed to the subject may be reduced. Further, the present stimulable phosphor has a high response speed to an exciting light and a high elimination speed of accumulated energy (i.e., afterglow), so that the present method for converting radiographic image may provide a higher reading speed on radiation image and a reduced time for eliminating after image, which leads to enhanced working

efficiency of the system. Still further, a stimulable excited spectrum of the present stimulable phosphor may be extended to an oscillating wave region of a semi-conductor laser so that excitation with a semi-conductor laser may be feasible, whereby a reading apparatus for radiation image may be miniaturized and simplified with a more reduced cost. And, the present stimulable phosphor has a superior water vapor resistance and thus reduction in emission luminance by stimulation with lapse of time may be greatly improved.

**Claims**

1. A radiation energy storage panel having a stimulable phosphor-containing layer characterized in that said stimulable phosphor is represented by the following formula:

$$(M_{1-x} \cdot M^{I}_{x})X \cdot aM^{II}X'_2 \cdot bM^{III}X''_3 \cdot cA{:}dB$$

wherein M represents either Cs or Rb; $M^I$ represents at least one metal which is Li, Na, K, Rb or Cs; $M^{II}$ represents at least one divalent metal which is Be, Mg, Ca, Sr, Ba, Zn, Cd, Cu or Ni; $M^{III}$ represents at least one metal which is Sc, Y, La, Ce, Pr, Nd, Pm, Sm, Eu, Cd, Tb, Dy, Ho, Er, Tm, Yb, Lu, Al, Ga or In; A represents at least one metal oxide which is BeO, MgO, CaO, SrO, BaO, ZnO, $Al_2O_3$, $Y_2O_3$, $La_2O_3$, $In_2O_3$, $SiO_2$, $TiO_2$, $GeO_2$, $SnO_2$, $Nb_2O_5$, $Ta_2O_5$ or $ThO_2$; B represents at least one metal which is Eu, Tb, Ce, Tm, Dy, Pr, Ho, Nd, Yb, Er, Gd, Lu, Sm, Y, Tl, Na, Ag, Cu, Mg, Pb, Bi, Mn or In; X, X' and each X'', which may be the same or different each represents a halogen atom which is F, Cl, Br or I; x, a, b, c and d are, independently, numerals in the range of $0 \leqq x \leqq 1$, $0 \leqq a \leqq 1$, $0 \leqq b \leqq 0.5$, $0 \leqq c \leqq 0.5$ and $0 < d \leqq 0.2$, respectively.

2. A radiation energy storage panel having a stimulable phosphor-containing layer of Claim 1, wherein said c is 0 and d is in the range of $0 < d \leqq 0.2$.

3. A radiation energy storage panel having a stimulable phosphor-containing layer of Claim 2, wherein said x is 1.

4. A radiation energy storage panel having a stimulable phosphor-containing layer of Claim 3, wherein said b is in the range of $0 \leqq b \leqq 1 \times 10^{-2}$.

5. A radiation energy storage panel having a stimulable phosphor-containing layer of Claim 4, wherein said $M^{III}$ is Y, La, Sm, Gd, Lu, Al, Ga or In.

6. A radiation energy storage panel having a stimulable phosphor-containing layer of Claim 5, wherein said X'' is F, Cl or Br.

7. A radiation energy storage panel having a stimulable phosphor-containing layer of Claim 3, wherein said $M^{II}$ is Be, Mg, Ca, Sr or Ba.

8. A radiation energy storage panel having a stimulable phosphor-containing layer of Claim 3, wherein said $M^I$ includes at least Rb or Cs.

9. A radiation energy storage panel having a stimulable phosphor-containing layer of Claim 8, wherein said B is Tl, Na, Ag or Cu.

10. A radiation energy storage panel having a stimulable phosphor-containing layer of Claim 4, wherein said d is in the range of $1 \times 10^{-6} \leqq d \leqq 0.1$.

11. A radiation energy storage panel having a stimulable phosphor-containing layer of Claim 2, wherein said x is in the range of $0 \leqq x < 0.9$ and said B comprises Tl.

12. A radiation energy storage panel having a stimulable phosphor-containing layer of Claim 1, wherein said c is in the range of $0 < c \leqq 0.2$ and said x is 1.

13. A method of converting a radiographic image which comprises the steps of:

(a) storing radiation energy-corresponding to a radiographic image in a stimulable phosphor of a panel comprising a stimulable phosphor-containing layer,

(b) scanning said layer with a stimulating ray to release said stored energy as a fluorescence, and

(c) detecting said fluorescence to form an image, wherein said stimulable phosphor is represented by the following formula:

$$(M_{1-x} \cdot M^{I}_{x})X \cdot aM^{II}X'_2 \cdot bM^{III}X''_3 \cdot cA{:}dB$$

as defined in claim 1

14. A method of converting a radiographic image of Claim 13, wherein said stimulating ray is a semiconductor laser.

**Patentansprüche**

1. Speicherplatte für Strahlungsenergie mit einer einen stimulierbaren Leuchtstoff enthaltenden Schicht, dadurch gekennzeichnet, daß der stimulierbare Leuchtstoff durch folgende Formel:

$$(M_{1-x} \cdot M^{I}_{x})X \cdot aM^{II}X'_2 \cdot bM^{III}X''_3 \cdot cA{:}dB$$

worin bedeuten:

M entweder Cs oder Rb;

$M^I$ mindestens ein aus Li, Na, K, Rb oder Cs bestehendes Metall;

$M^{II}$ mindestens ein aus Be, Mg, Ca, Sr, Ba, Zn, Cd, Cu oder Ni bestehendes zweiwertiges Metall;

$M^{III}$ mindestens ein aus Sc, Y, La, Ce, Pr, Nd, Pm, Sm, Eu, Cd, Tb, Dy, Ho, Er, Tm, Yb, Lu, Al, Ga oder In bestehendes Metall;

A mindestens ein aus BeO, MgO, CaO, SrO, BaO, ZnO, $Al_2O_3$, $Y_2O_3$, $La_2O_3$, $In_2O_3$, $SiO_2$, $TiO_2$, $GeO_2$, $SnO_2$, $Nb_2O_5$, $Ta_2O_5$ oder $ThO_2$ bestehendes Metalloxid;

B mindestens ein aus Eu, Tb, Ce, Tm, Dy, Pr, Ho, Nd, Yb, Er, Gd, Lu, Sm, Y, Tl, Na, Ag, Cu, Mg, Pb, Bi, Mn oder In bestehendes Metall;

X, X' und X'', die gleich oder verschieden sein können, jeweils ein aus F, Cl, Br oder I bestehendes Halogenatom und

x, a, b, c und d unabhängig voneinander Zahlen im Bereich von $0 \leqq x \leqq 1$, $0 \leqq a \leqq 1$, $0 \leqq b \leqq 0{,}5$, $0 \leqq c \leqq 0{,}5$ und $0 < d \leqq 0{,}2$ darstellbar ist.

2. Speicherplatte für Strahlungsenergie mit einer einen stimulierbaren Leuchtstoff enthaltenden Schicht nach Anspruch 1, dadurch gekennzeichnet, daß c=0 und d im Bereich $0 < d \leqq 0{,}2$ liegt.

3. Speicherplatte für Strahlungsenergie mit einer einen stimulierbaren Leuchtstoff enthaltenden Schicht nach Anspruch 2, dadurch gekennzeichnet, daß x=1.

4. Speicherplatte für Strahlungsenergie mit einer einen stimulierbaren Leuchtstoff enthaltenden Schicht nach Anspruch 3, dadurch gekennzeichnet, daß b im Bereich $0 \leqq b \leqq 1 \times 10^{-2}$ liegt.

5. Speicherplatte für Strahlungsenergie mit einer einen stimulierbaren Leuchtstoff enthaltenden Schicht nach Anspruch 4, dadurch gekennzeichnet, daß $M^{III}$ für Y, La, Sm, Gd, Lu, Al, Ga oder In steht.

6. Speicherplatte für Strahlungsenergie mit einer einen stimulierbaren Leuchtstoff enthaltenden Schicht nach Anspruch 5, dadurch gekennzeichnet, daß X'' für F, Cl oder Br steht.

7. Speicherplatte für Strahlungsenergie mit einer einen stimulierbaren Leuchtstoff enthaltenden Schicht nach Anspruch 3, dadurch gekennzeichnet, daß $M^{II}$ für Be, Mg, Ca, Sr oder Ba steht.

8. Speicherplatte für Strahlungsenergie mit einer einen stimulierbaren Leuchtstoff enthaltenden Schicht nach Anspruch 3, dadurch gekennzeichnet, daß $M^I$ mindestens Rb oder Cs umfaßt.

9. Speicherplatte für Strahlungsenergie mit einer einen stimulierbaren Leuchtstoff enthaltenden Schicht nach Anspruch 8, dadurch gekennzeichnet, daß B für Tl, Na, Ag oder Cu steht.

10. Speicherplatte für Strahlungsenergie mit einer einen stimulierbaren Leuchtstoff enthaltenden Schicht nach Anspruch 4, dadurch gekennzeichnet, daß d im Bereich $1 \times 10^{-6} \leqq d \leqq 0{,}1$ liegt.

11. Speicherplatte für Strahlungsenergie mit einer einen stimulierbaren Leuchtstoff enthaltenden Schicht nach Anspruch 2, dadurch gekennzeichnet, daß x im Bereich $0 \leqq x < 0.9$ liegt und B für Tl steht.

12. Speicherplatte für Strahlungsenergie mit einer einen stimulierbaren Leuchtstoff enthaltenden Schicht nach Anspruch 1, dadurch gekennzeichnet, daß c im Bereich $0 < c \leqq 0{,}2$ liegt und x=1.

13. Verfahren zum Umwandeln eines radiographischen Bildes, umfassend folgende Stufen:

(a) Abspeichern der einem radiographischen Bild entsprechenden Strahlungsenergie in einem stimulierbaren Leuchtstoff einer Platte mit einer einen stimulierbaren Leuchtstoff enthaltenden Schicht;

(b) Abtasten der Schicht mit einer stimulierenden Strahlung zur Freisetzung der gespeicherten Energie als Fluoreszenz und

(c) Nachweisen der Fluoreszenz zur Erzeugung eines Bildes, wobei der stimulierbare Leuchtstoff durch die folgende Formel:

$$(M_{1-x} \cdot M^I_x)X \cdot aM^{II}X'_2 \cdot bM^{III}X''_3 \cdot cA{:}dB$$

in der Definition gemäß Anspruch 1 darstellbar ist.

14. Verfahren zum Umwandlung eines radiographischen Bildes nach Anspruch 13, dadurch gekennzeichnet, daß die stimulierende Strahlung aus einem Halbleiterlaser stammt.

**Revendications**

1. Panneau de stockage d'énergie rayonnante ayant une couche contenant du phosphore stimulable, caractérisé en ce que ledit phosphore stimulable est représente par la formule suivante:

$$(M_{1-x} \cdot M^I_x)X \cdot aM^{II}X'_2 \cdot bM^{III}X''_3 \cdot cA{:}dB$$

ou M représente l'un de Cs ou Rb; $M^I$ représente au moins un metal qui est Li, Na, K, Rb ou Cs; $M^{II}$ représente au moins un metal bivalent qui est Be, Mg, Ca, Sr, Ba, Zn, Cd, Cu ou Ni; $M^{III}$ représente au moins un métal qui est Sc, Y, La, Ce, Pr, Nd, Pm, Sm, Eu, Cd, Tb, Dy, Ho, Er, Tm, Yb, Lu, Al, Ga ou In; A représente au moins un oxyde métallique qui est BeO, MgO, CaO, SrO, BaO, ZnO, $Al_2O_3$, $Y_2O_3$, $La_2O_3$, $In_2O_3$, $SiO_2$, $TiO_2$, $GeO_2$, $SnO_2$, $Nb_2O_5$, $Ta_2O_5$ ou $ThO_2$; B représente au moins un métal qui est Eu, Tb, Ce, Tm, Dy, Pr, Ho, Nd, Yb, Er, Gd, Lu, Sm, Y, Tl, Na, Ag, Cu, Mg, Pb, Bi, Mn ou In; X, X' et X'', qui peuvent être identiques ou différents, représentent chacun un atome d'halogène, qui est F, Cl, Br ou I; x, a, b, c et d sont indépendamment des nombres dans la gamme de $0 \leq x \leq 1$, $0 \leq a \leq 1$, $0 \leq b \leq 0{,}5$, $0 \leq c \leq 0{,}5$ et $0 < d \leq 0{,}2$, respectivement.

2. Panneau de stockage d'énergie rayonnante ayant une couche contenant du phosphore stimulable,

selon la revendication 1, dans lequel ledit c est 0 et d est dans la gamme de $0<d\leq 0{,}2$.

3. Panneau de stockage d'énergie rayonnante ayant une couche contenant du phosphore stimulable, selon la revendication 2, dans lequel ledit x est 1.

4. Panneau de stockage d'énergie rayonnante ayant une couche contenant du phosphore stimulable, selon la revendication 3, dans lequel ledit b est dans la gamme de $0\leq b\leq 1\times 10^{-2}$.

5. Panneau de stockage d'énergie rayonnante ayant une couche contenant du phosphore stimulable, selon la revendication 4, dans lequel ledit $M^{III}$ est Y, La, Sm, Gd, Lu, Al, Ga ou In.

6. Panneau de stockage d'énergie rayonnante ayant une couche contenant du phosphore stimulable, selon la revendication 5, dans lequel $X''$ est F, Cl ou Br.

7. Panneau de stockage d'énergie rayonnante ayant une couche contenant du phosphore stimulable, selon la revendication 3, dans lequel $M^{II}$ est Be, Mg, Ca, Sr ou Ba.

8. Panneau de stockage d'énergie rayonnante ayant une couche contenant du phosphore stimulable, selon la revendication 3, dans lequel $M^I$ comprend au moins Rb ou Cs.

9. Panneau de stockage d'énergie rayonnante ayant une couche contenant du phosphore stimulable, selon la revendication 8, dans lequel ledit B est Tl, Na, Ag ou Cu.

10. Panneau de stockage d'énergie rayonnante ayant une couche contenant du phosphore stimulable, selon la revendication 4, dans lequel ledit d est dans la gamme de $1\times 10^{-6}\leq d\leq 0{,}1$.

11. Panneau de stockage d'énergie rayonnante ayant une couche contenant du phosphore stimulable, selon la revendication 2, dans lequel ledit x est dans la gamme de $0\leq x\leq 0{,}9$ et ledit B comprend Tl.

12. Panneau de stockage d'énergie rayonnante ayant une couche contenant du phosphore stimulable, selon la revendication 1, dans lequel ledit c est dans la gamme de $0<c\leq 0{,}2$ et ledit x est 1.

13. Procédé de conversion d'une image radiographique, comprenant les étapes consistant à:

(a) stocker une énergie rayonnante corespondant à ine image radiographique dans un phosphore stimulable d'un panneau comprenant une couche contenant du phosphore stimulable,

(b) balayer ladite couche avec un rayon stimulant, pour libérer ladite énergie stockée, sous forme de fluorescence, et

(c) détecter ladite fluorescence pour former une image dans laquelle ledit phosphore stimulable est représenté par la formule suivante:

$$(M_{1-x}\cdot M^I_x)X\cdot aM^{II}X'_2\cdot bM^{III}X''_3\cdot cA{:}dB$$

14. Procédé de conversion, d'une image radiographique, telle que définie à la revendication 1, selon la revendication 13, dans lequel ledit rayon stimulant est un laser à semiconducteur.

Fig. 1

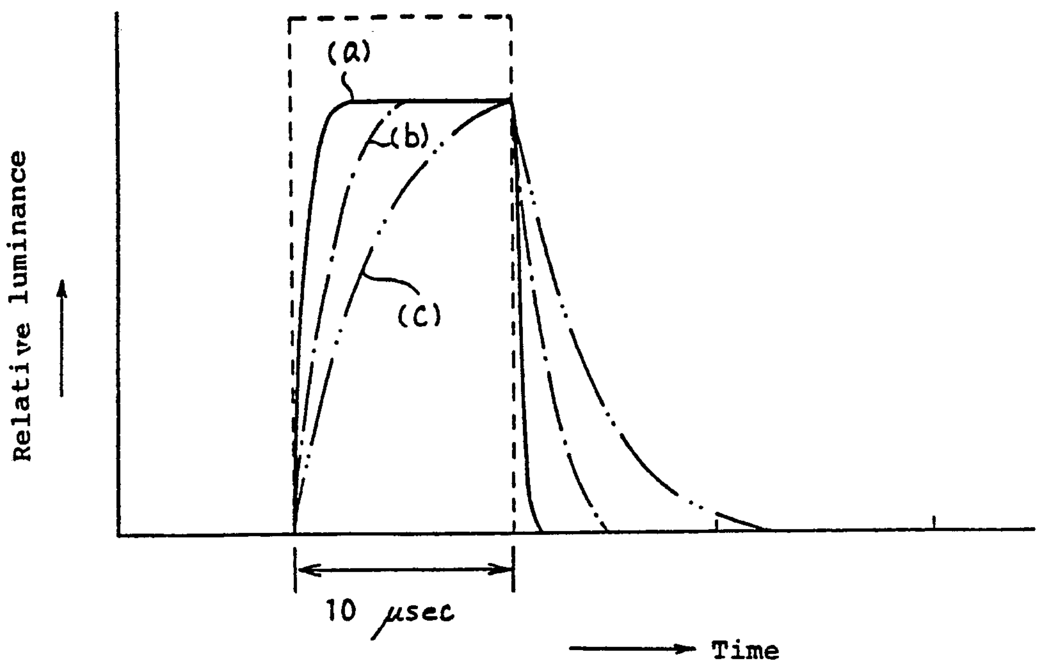
(a)
(b)
(c)
Relative luminance
10 μsec
Time

Fig. 2

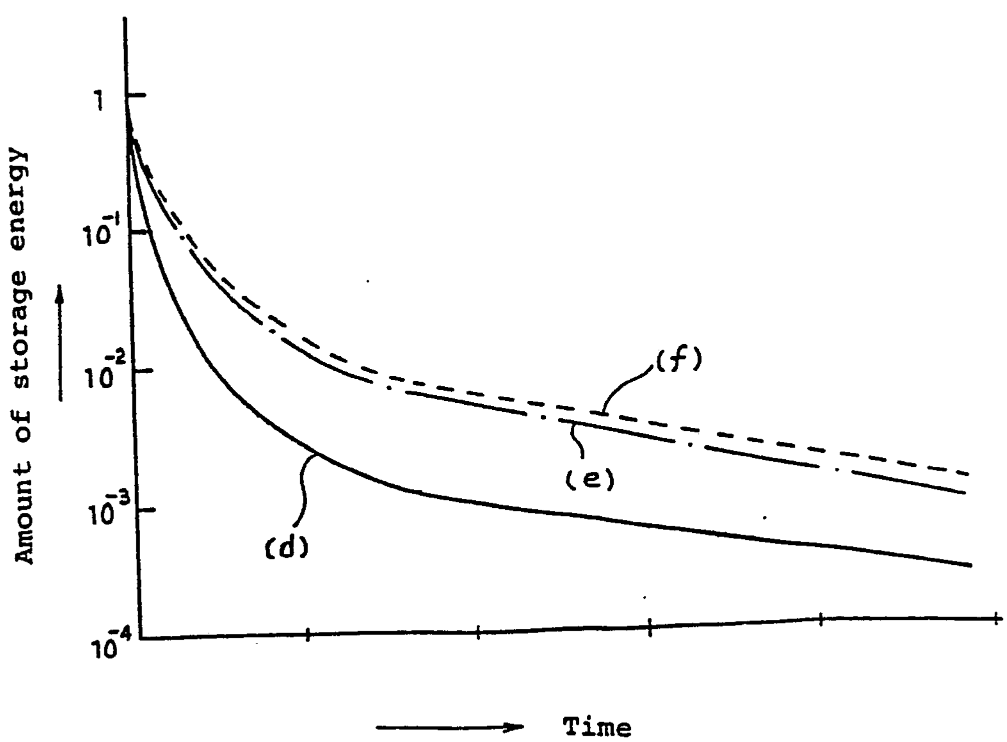
1
$10^{-1}$
$10^{-2}$
$10^{-3}$
$10^{-4}$
Amount of storage energy
(f)
(e)
(d)
Time

Fig. 3

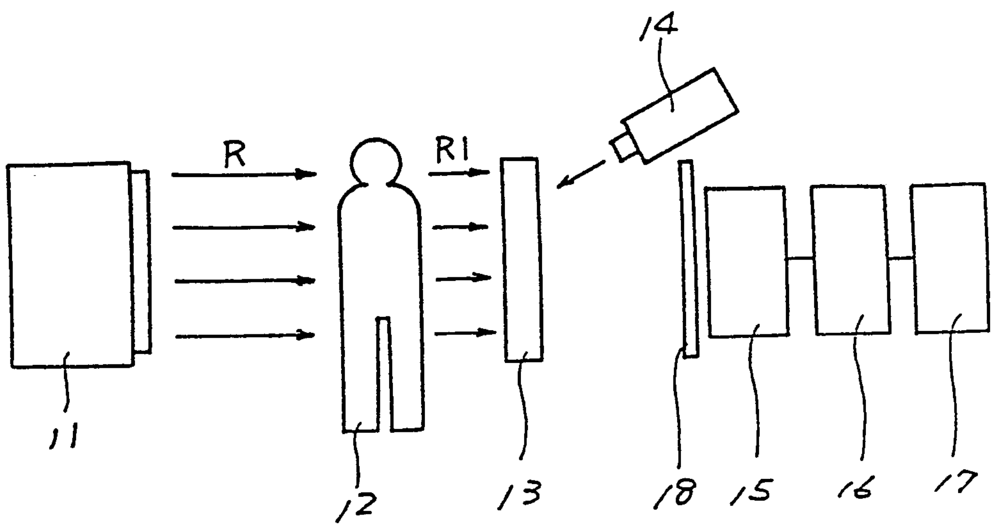
14
R
R1
11
12
13
18
15
16
17

Fig. 4

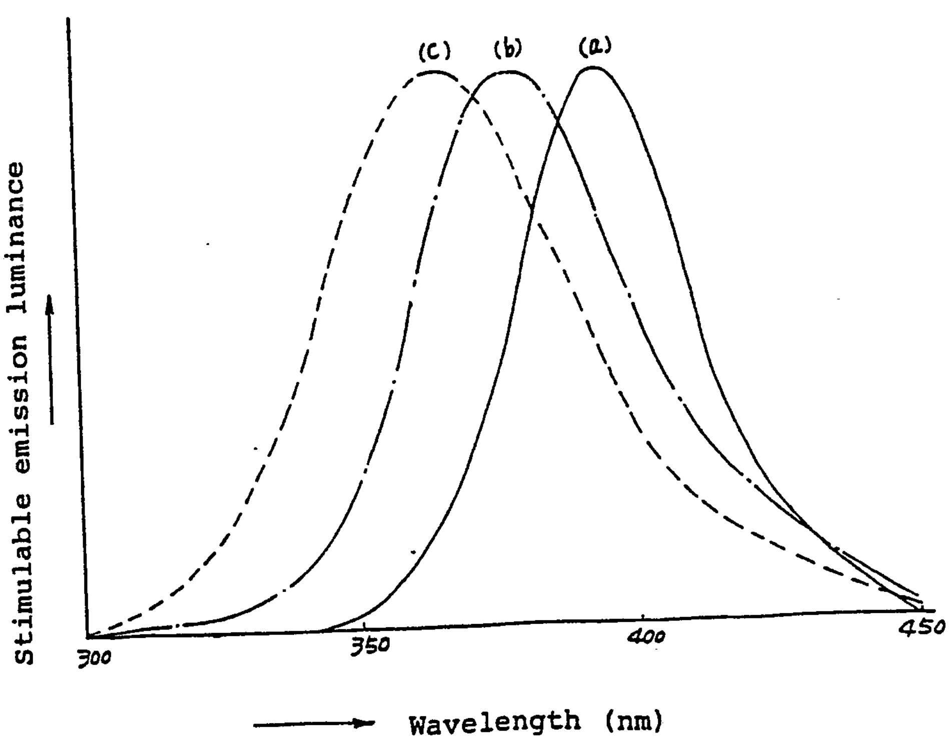
(c)
(b)
(a)
Stimulable emission luminance
300
350
400
450
Wavelength (nm)

Fig. 5

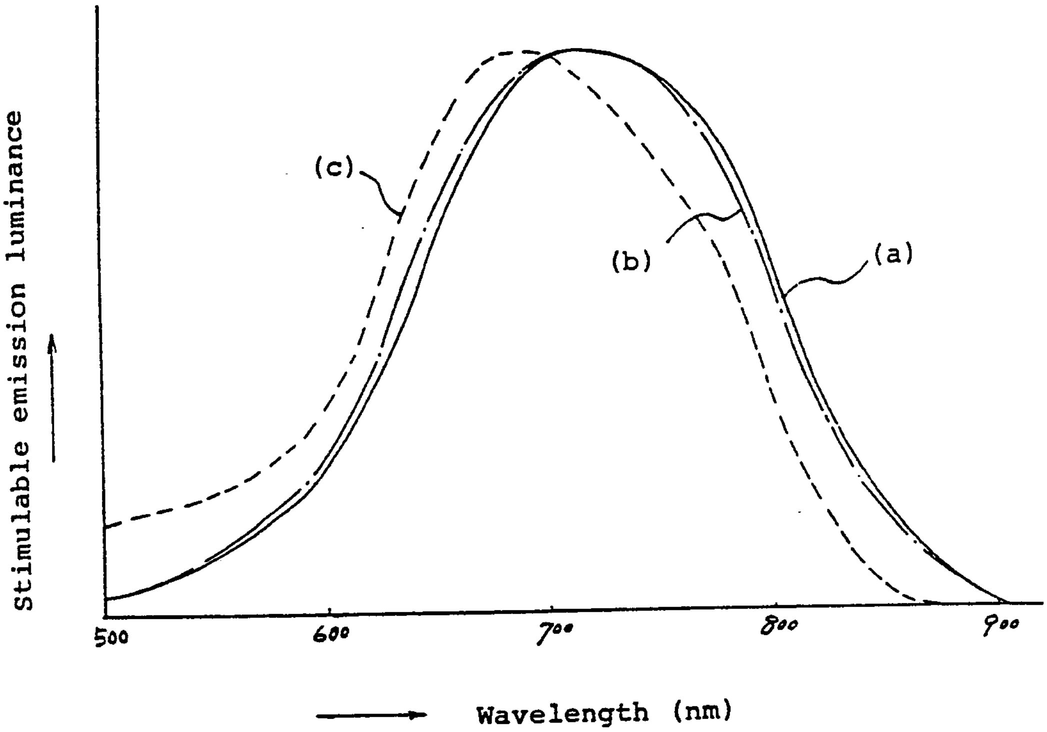
Stimulable emission luminance
(a)
(b)
(c)
500
600
700
800
900
Wavelength (nm)

Fig. 6

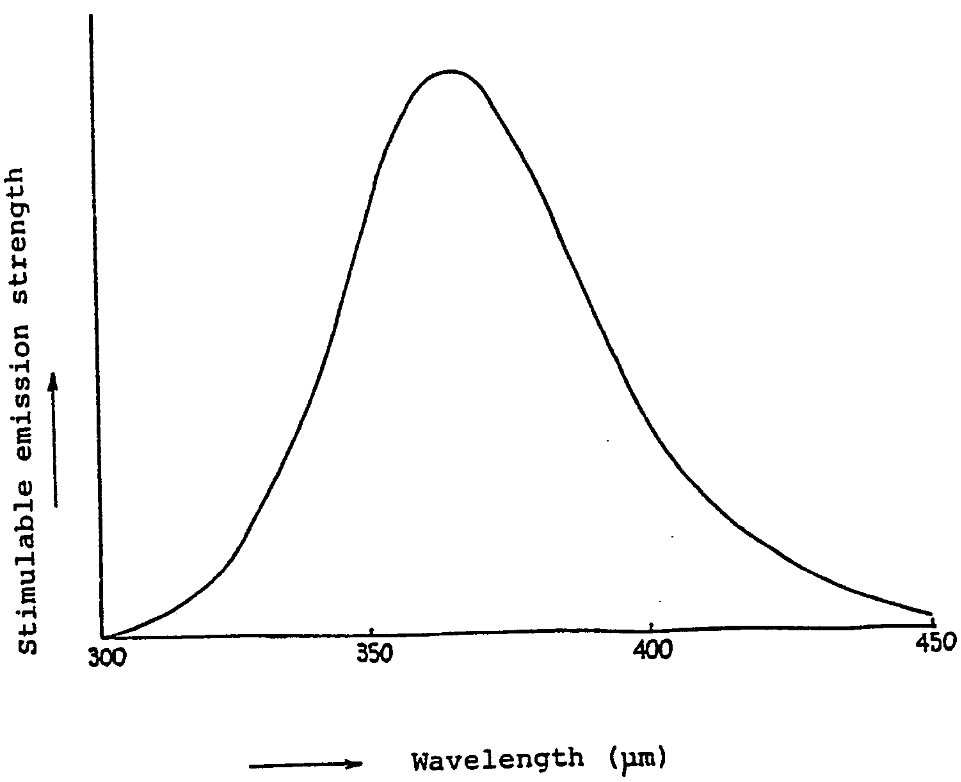
Stimulable emission strength
300
350
400
450
Wavelength (μm)

Fig. 7

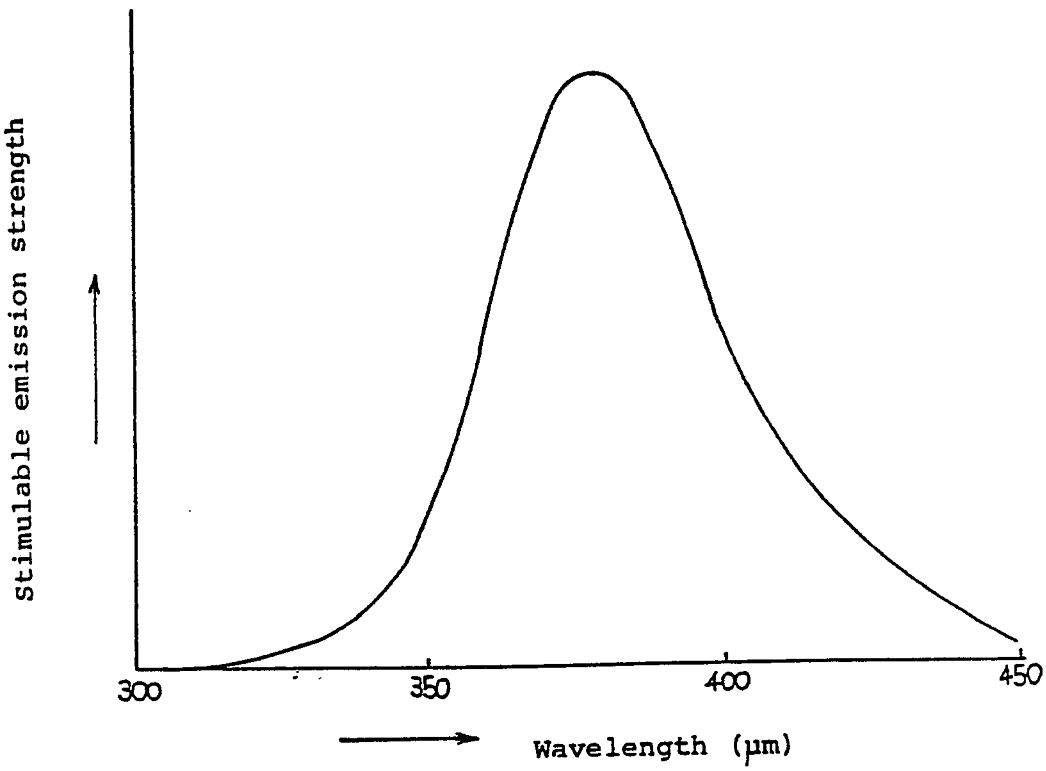
Stimulable emission strength
300
350
400
450
Wavelength (μm)

Fig. 8

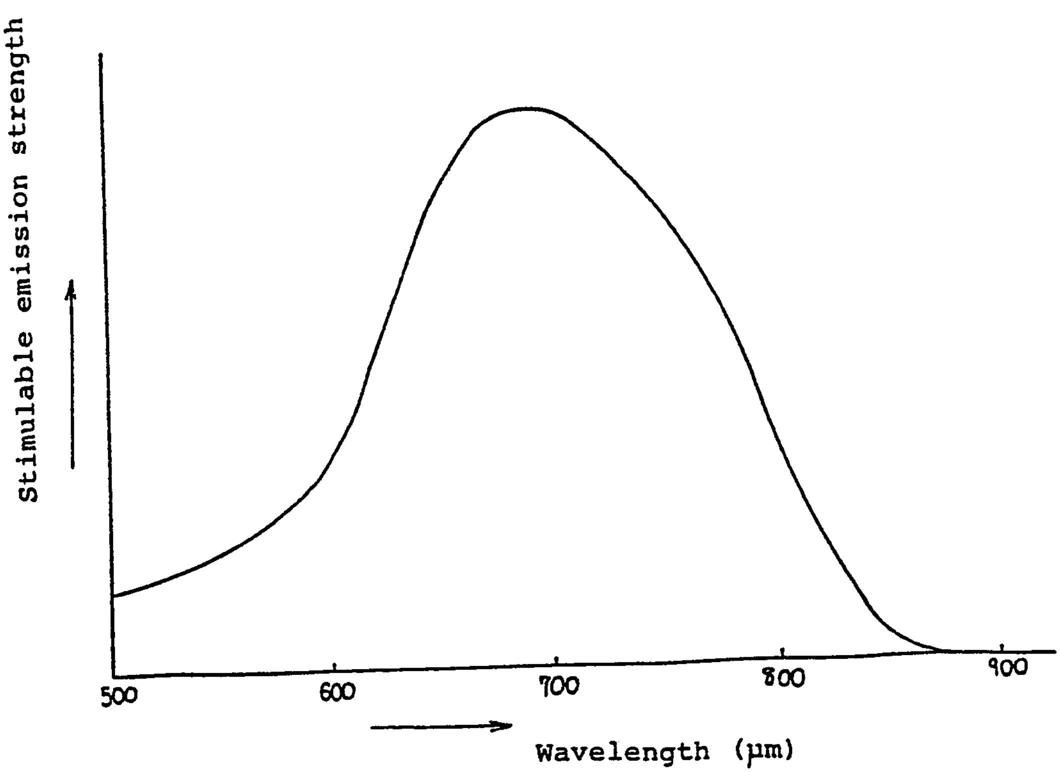
Stimulable emission strength
500
600
700
800
900
Wavelength (μm)

Fig. 9

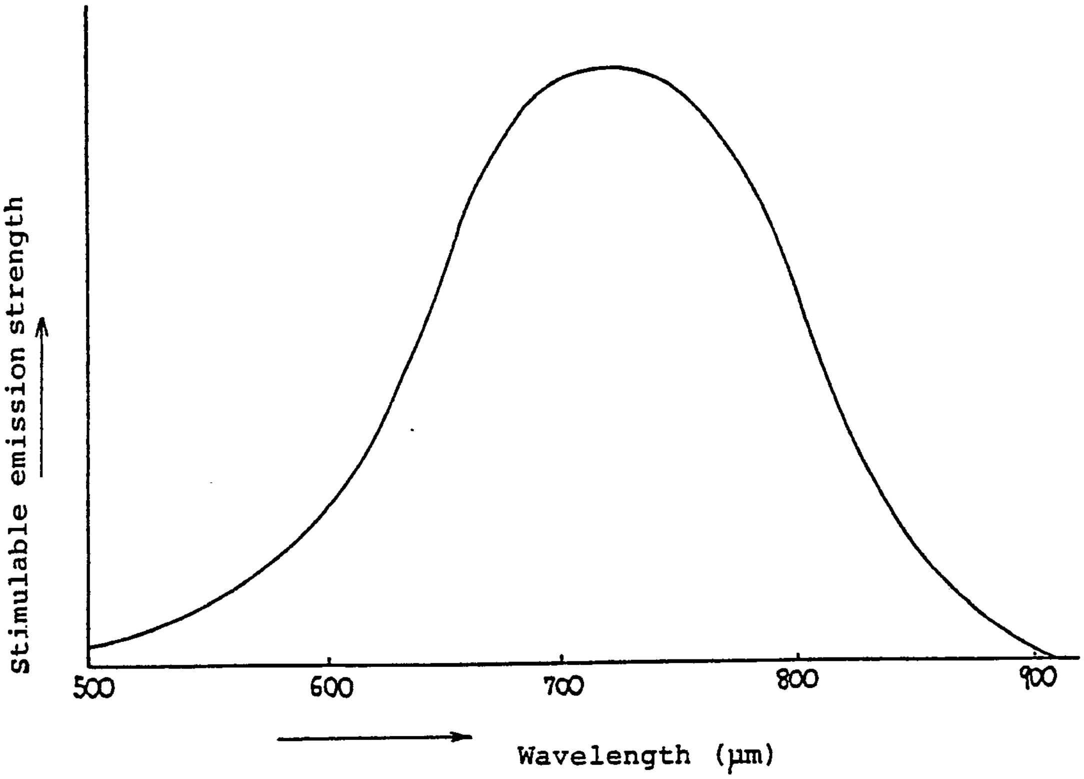
Stimulable emission strength
500
600
700
800
900
Wavelength (µm)

Fig. 10

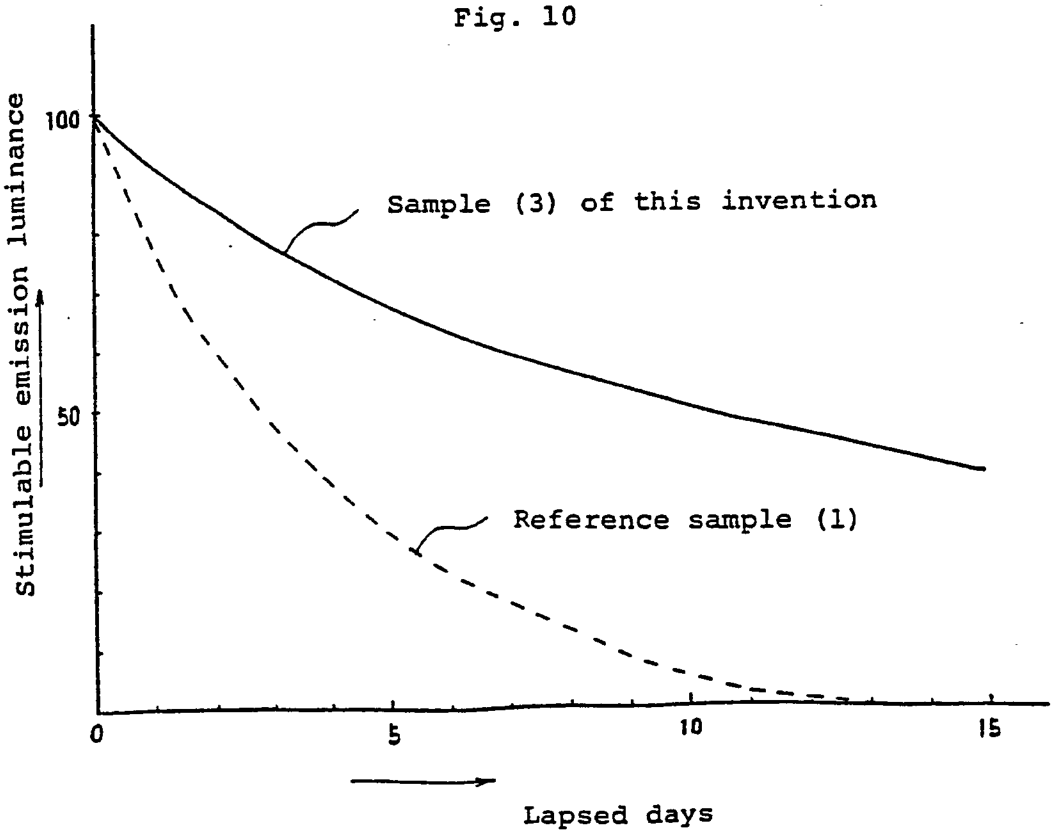
Stimulable emission luminance
100
50
Sample (3) of this invention
Reference sample (1)
0
5
10
15
Lapsed days